(19) **Europäisches Patentamt**
**European Patent Office**
**Office européen des brevets**

(11) **EP 4 523 928 A1**

(12) **EUROPEAN PATENT APPLICATION**
published in accordance with Art. 153(4) EPC

(43) Date of publication:
**19.03.2025 Bulletin 2025/12**

(21) Application number: **22946938.2**

(22) Date of filing: **22.12.2022**

(51) International Patent Classification (IPC):
**B60C 19/00** (2006.01)

(52) Cooperative Patent Classification (CPC):
**B60C 19/00**

(86) International application number:
**PCT/JP2022/047323**

(87) International publication number:
**WO 2023/243123 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.06.2022 JP 2022096287**

(71) Applicant: **SUMITOMO RUBBER INDUSTRIES,
LTD.**
**Kobe-shi, Hyogo 651-0072 (JP)**

(72) Inventors:
• **YAJIMA, Ryo**
**Kobe-shi, Hyogo 651-0072 (JP)**
• **SATO, Daisuke**
**Kobe-shi, Hyogo 651-0072 (JP)**
• **MORITA, Koki**
**Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(54) **WASTE TIRE ASSESSMENT METHOD, RECYCLED MATERIAL PRODUCTION METHOD, TIRE PRODUCTION METHOD**

(57) A reclaimed material manufacturing method includes: step S11 of acquiring tire information concerning a waste tire (200); steps S12 to S17 of determining, based on the tire information acquired in step s11, whether or not a part or all of the waste tire (200) is suitable as a raw material for a predetermined reclaimed material; and a first manufacturing step of manufacturing the reclaimed material by using the part or all of the waste tire (200) determined in steps S12 to S17 as suitable as a raw material for the reclaimed material.

FIG.3

**EP 4 523 928 A1**

**Description**

TECHNICAL FIELD

The present disclosure relates to a waste tire determination method, a reclaimed material manufacturing method, and a tire manufacturing method.

BACKGROUND ART

Techniques for reusing waste tires are generally known. For example, there is known a technique for reusing a waste tire as a retreaded tire by replacing a tread portion of the waste tire (see PTL 1). In addition, there is known a technique for manufacturing a reclaimed material such as rubber powder by using the waste tire as a raw material.

CITATION LIST

[PATENT LITERATURE]

[PTL 1] Japanese Patent Application Publication No. 2017-196917

SUMMARY OF THE INVENTION

PROBLEMS TO BE SOLVED BY THE INVENTION

Meanwhile, the waste tire that is used as a raw material of the reclaimed material includes various types of waste tires. For example, the waste tire that is used as a raw material of the reclaimed material includes waste tires mounted on vehicles such as a passenger car, a bus, a truck, a motorcycle, a three-wheel passenger car, an engine assisted bicycle, and a bicycle. In addition, the waste tire that is used as a raw material of the reclaimed material includes: a waste tire that was an all-season tire; and a waste tire that was a studless tire. In addition, the waste tire that is used as a raw material of the reclaimed material includes a plurality of types of waste tires having different labels defined by a standard. In addition, the waste tire that is used as a raw material of the reclaimed material includes a plurality of types of waste tires of which tire materials have different configurations. The tire material includes a natural rubber, a synthetic rubber, a reinforcing material, and a compounding agent. However, according to a conventional technique for manufacturing the reclaimed material, various types of waste tires are processed collectively without distinction. As a result, it was difficult for the conventional technique to improve the quality of the manufactured reclaimed material.

It is an object of the present disclosure to provide a waste tire determination method, a reclaimed material manufacturing method, and a tire manufacturing method that can improve the quality of the reclaimed material.

SOLUTION TO THE PROBLEMS

A waste tire determination method according to an aspect of the present disclosure includes an acquisition step and a determination step. In the acquisition step, tire information concerning a waste tire is acquired. In the determination step, it is determined, based on the tire information acquired in the acquisition step, whether or not a part or all of the waste tire is suitable as a raw material for a predetermined reclaimed material.

With the above-described method, it is possible to select, out of various types of waste tires, a part or all of a waste tire that is suitable as a raw material for the reclaimed material. Accordingly, it is possible to improve the quality of the reclaimed material manufactured by using the selected part or all of the waste tire.

ADVANTAGEOUS EFFECTS OF THE INVENTION

According to the present disclosure, it is possible to improve the quality of the reclaimed material.

BRIEF DESCRIPTION OF THE DRAWINGS

[FIG. 1] FIG. 1 is a diagram showing a configuration of a waste tire determination system that is used in a reclaimed material manufacturing method according to an embodiment of the present disclosure.
[FIG. 2] FIG. 2 is a diagram showing a configuration of a reading portion of the waste tire determination system shown in FIG. 1.

[FIG. 3] FIG. 3 is a flowchart showing an example of a waste tire determination process executed by the waste tire determination system shown in FIG. 1.

[FIG. 4] FIG. 4 is a diagram showing another configuration of the waste tire determination system that is used in the reclaimed material manufacturing method according to the embodiment of the present disclosure.

[FIG. 5] FIG. 5 is a diagram showing a configuration of a conveyance portion of the waste tire determination system shown in FIG. 4.

DESCRIPTION OF EMBODIMENTS

The following describes an embodiment of the present disclosure with reference to the accompanying drawings. It should be noted that the following embodiment is an example of a specific embodiment of the present disclosure and should not limit the technical scope of the present disclosure.

[Reclaimed material]

First, an explanation is given of a reclaimed material that is manufactured by a reclaimed material manufacturing method according to the embodiment of the present disclosure.

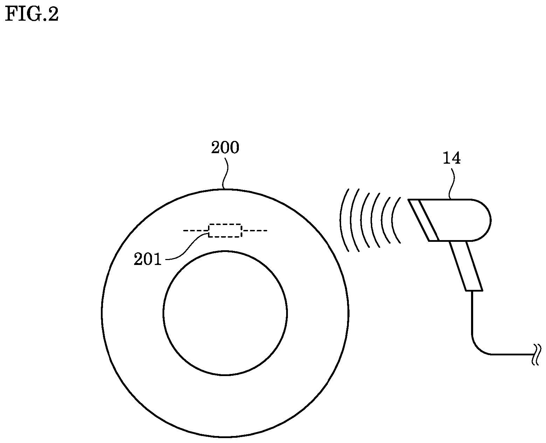

In the present description, the reclaimed material is defined as a material that is obtained by finely decomposing and purifying a tire (a waste tire 200 (see FIG. 2)) that has been disposed due to life termination, failure or the like, and is to be reused in a new product. Producing the reclaimed material is close to producing a new raw material. For this reason, it is important, in producing the reclaimed material, to take information concerning the waste tire 200 into consideration.

Specifically, the reclaimed material includes rubber powder, reclaimed carbon black, reclaimed plasticizer, reclaimed monomer (isoprene, styrene, butadiene, etc.), reclaimed polymer (polymer obtained from reclaimed monomer), reclaimed thermoplastic elastomer, reclaimed steel, and reclaimed organic fibrous material. In addition, the reclaimed material does not include materials that are obtained from the waste tire 200 without going through the above-mentioned decomposing and purifying processes. For example, the reclaimed material does not include a material that is obtained by cutting unnecessary parts from the waste tire 200, an example of which is a base tire for retreading.

Here, the rubber powder is granulated rubber or powdered rubber that is obtained by crushing a crosslinked rubber material. The rubber powder is added when a rubber composition or the like is newly manufactured. The reclaimed material manufacturing method according to the embodiment of the present disclosure manufactures two types of rubber power: rubber powder to be blended into tread; and rubber powder not to be blended into tread. The rubber powder to be blended into tread is rubber powder intended for being used in manufacturing the tread portion of the tire. The rubber powder not to be blended into tread is rubber powder intended for being used in manufacturing a member of the tire that is different from the tread portion.

In addition, the reclaimed carbon black is recycled carbon black that is obtained by causing carbon black contained in the waste tire 200 to be subjected to a thermal decomposition process or the like. For example, the reclaimed carbon black is added when a rubber composition or a plastic product is newly manufactured. The reclaimed carbon black is used as a reinforcing material, a material for coloring the product, or the like depending on its properties.

In addition, the reclaimed plasticizer is a plasticizer extracted from the waste tire 200, or a low-molecular-weight polymer that is obtained by decomposing a polymer component contained in the waste tire 200. The reclaimed plasticizer is added when a rubber composition or the like is newly manufactured. In addition, the reclaimed plasticizer may be reacted again to obtain a high-molecular-weight polymer.

In addition, the reclaimed monomer includes various types of monomers that are obtained by chemically decomposing polymer components and organic fibers contained in the waste tire 200 by a thermal decomposition, a hydrolysis, an enzymatic decomposition, or the like. The reclaimed monomer may be recovered and reacted to obtain a high-molecular-weight polymer and various types of plasticizers.

In addition, the reclaimed steel is a steel material manufactured from a steel material that was recovered from a product such as a tire that contained steel and was subjected to disposal due to deterioration, wear, or damage. In addition, the reclaimed organic fibrous material is an organic fibrous material manufactured from an organic fibrous material that was recovered from a product such as a tire that contained an organic fibrous material and was subjected to disposal.

In addition, the reclaimed thermoplastic elastomer is a polymer including a hard segment and a soft segment, wherein a pseudo crosslinking point is formed by the van der Waals force of the hard segment and elastomer elasticity is exhibited. The reclaimed thermoplastic elastomer is a thermoplastic elastomer that was separated from the waste tire 200 in which it had been contained. It is possible to manufacture a new product by, for example, re-melting and injection molding the reclaimed thermoplastic elastomer.

It is noted that the reclaimed material may include reclaimed rubber. The reclaimed rubber is obtained by applying heat, pressure, and a physical process to a part or all of the waste tire 200 in such a way as to restore adhesiveness and plasticity. The reclaimed rubber may be used for: an industrial rubber product such as a tire for vehicle, a belt, or a hose; a mat; a footwear; a shoe sole; a rubber-coated cloth; or the like.

In addition, the reclaimed material may be a material different from the rubber powder, the reclaimed carbon black, the reclaimed plasticizer, the reclaimed thermoplastic elastomer, and the reclaimed rubber. In addition, the rubber powder may include rubber powder that is intended to be used in manufacturing an inner liner portion of the tire. In addition, the rubber powder may include not-for-tire rubber powder that is for use different from manufacturing a tire or may include rubber powder that is not limited to a particular use.

The waste tire 200 includes a tire that had been mounted on a vehicle and was subjected to disposal due to deterioration, wear, or damage. In addition, the waste tire 200 includes a tire that did not satisfy the shipping standards at the manufacturing site, and a raw tire thereof. For example, the waste tire 200 is a pneumatic tire. For example, the vehicle is a passenger car.

The waste tire 200 is preferably equipped with a wireless tag 201 (see FIG. 2). The wireless tag 201 is installed to the waste tire 200 at a place inside the outer surface of the waste tire 200. For example, the wireless tag 201 may be embedded within a tire before becoming the waste tire 200 when the tire is manufactured. It is noted that the wireless tag 201 may be stuck onto an inner space surface of a tire before becoming the waste tire 200 when the tire is manufactured or sold.

For example, the wireless tag 201 is what is called a passive RFID tag. The wireless tag 201 includes an antenna, a storage portion, and a control portion. The antenna is used in data transmission/reception performed with an external reading apparatus. The storage portion stores tire identification information used for identifying the waste tire 200. For example, the tire identification information is a code (character sequence) uniquely assigned to the waste tire 200. It is noted that the tire identification information may be a serial number of the wireless tag 201. In response to a request from an external reading apparatus, the control portion transmits, to the reading apparatus, data including the tire identification information stored in the storage portion.

It is noted that the waste tire 200 is not limited to a pneumatic tire. For example, the waste tire 200 may be a non-pneumatic tire such as what is called a solid tire. In addition, the waste tire 200 may be a resin tire in which thermoplastic elastomer is used. In addition, the vehicle is not limited to the passenger car, but may be any movable body that travels using a tire. For example, the vehicle may be a bus, a truck, a motorcycle, a three-wheel passenger car, an engine assisted bicycle, or a bicycle.

Meanwhile, the waste tire 200 that is used as a raw material of the reclaimed material includes various types of waste tires 200. For example, the waste tire 200 that is used as a raw material of the reclaimed material includes waste tires 200 mounted on the above-mentioned various types of vehicles. In addition, the waste tire 200 that is used as a raw material of the reclaimed material includes: a waste tire that was an all-season tire; and a waste tire that was a studless tire. In addition, the waste tire 200 that is used as a raw material of the reclaimed material includes a plurality of types of waste tires 200 having different labels defined by a standard. In addition, the waste tire 200 that is used as a raw material of the reclaimed material includes a plurality of types of waste tires 200 of which tire materials have different configurations.

For example, the tire material includes a thermoplastic elastomer component and a polymer component such as a rubber component. For example, the thermoplastic elastomer component is a polyurethane-based thermoplastic elastomer, a polyester-based thermoplastic elastomer, an olefin-based thermoplastic elastomer, a vinyl chloride-based thermoplastic elastomer, a polyamide-based thermoplastic elastomer, or a fluorine-based thermoplastic elastomer. For example, the rubber component is a diene-based rubber component or a non-diene based rubber component. For example, the diene-based rubber component is a natural rubber (NR), an isoprene rubber (IR), a butadiene rubber (BR), a styrene-butadiene rubber (SBR), an acrylonitrile/butadiene rubber (NBR), a chloroprene rubber (CR), or a butyl rubber (IIR). In addition, the tire material includes a reinforcing material such as carbon black and silica. Here, the carbon black includes carbon black with different grades such as SAF-HS, SAF, ISAF-HS, ISAF, ISAF-LS, HAF-HS, HAF, HAF-LS, FEF, and GPF. In addition, silicas having various specific surface areas are used depending on the required performances. In addition, the tire material includes various types of compounding agents. For example, the compounding agents are: a plasticizer component such as resin and oil; a filler component such as calcium carbonate, aluminum hydroxide, talc, and bio-char; a processing aid such as antioxidant, stearic acid, and fatty acid metal salt; a vulcanizing agent such as sulfur; a vulcanization accelerator; and an accelerating aid such as zinc oxide.

However, according to a conventional technique for manufacturing the reclaimed material, various types of waste tires 200 are processed collectively without distinction. As a result, it was difficult for the conventional technique to improve the quality of the manufactured reclaimed material.

On the other hand, with the reclaimed material manufacturing method according to the embodiment of the present disclosure, as described below, it is possible to improve the quality of the reclaimed material.

[Waste tire determination method]

The following describes a waste tire determination method according to the embodiment of the present disclosure.

The waste tire determination method according to the embodiment of the present disclosure includes an acquisition step, a determination step, and a decision step.

In the acquisition step, tire information concerning the waste tire 200 is acquired.

In the determination step, it is determined, based on the tire information acquired in the acquisition step, whether or not a part or all of the waste tire 200 is suitable as a raw material for the reclaimed material.

In the decision step, it is decided, based on the determination result of the determination step, for which reclaimed material the part or all of the waste tire 200 is to be used as a raw material. In addition, a manufacture condition for manufacturing the reclaimed material using the part or all of the waste tire 200, or a use condition for using the reclaimed material manufactured by using the part or all of the waste tire 200 is decided in the decision step.

It is noted that a plurality of waste tires 200 are preliminarily prepared before the waste tire determination method according to the embodiment of the present disclosure is executed. Specifically, the plurality of waste tires 200 are carried to a site where the waste tire determination method according to the embodiment of the present disclosure is executed. The acquisition step, the determination step, and the decision step are executed for each of the prepared waste tires 200. The waste tires 200 are carried by a person or a carrying machine operated by a person.

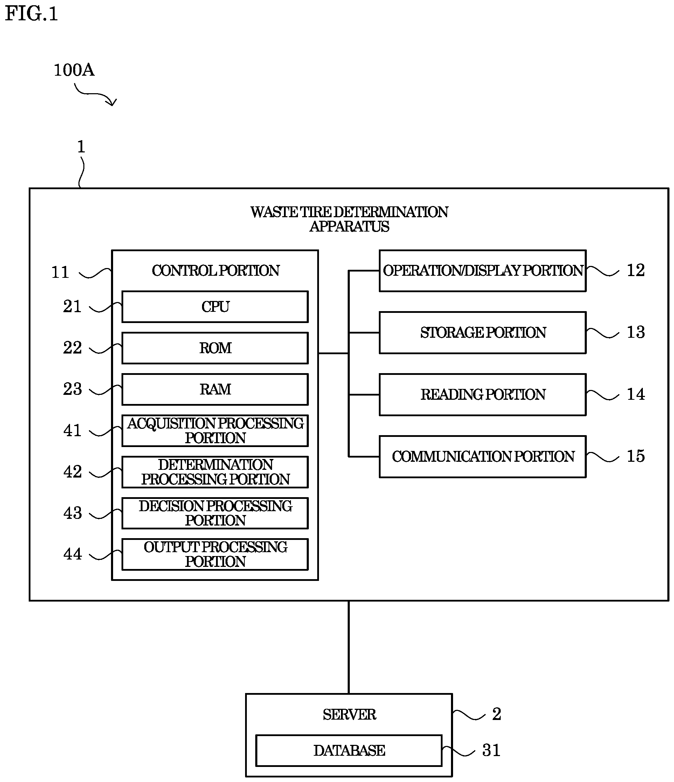

The acquisition step, the determination step, and the decision step are executed by a waste tire determination system 100A shown in FIG. 1.

[Waste tire determination system 100A]

Here, a description is given of the waste tire determination system 100A with reference to FIG. 1 and FIG. 2.

As shown in FIG. 1, the waste tire determination system 100A includes a waste tire determination apparatus 1 and a server 2.

In the waste tire determination system 100A, the waste tire determination apparatus 1 is communicably connected to the server 2 via a communication network such as the Internet or LAN (Local Area Network).

The waste tire determination apparatus 1 is provided with a determination function to determine whether or not the waste tire 200 (see FIG. 2) is suitable as a raw material for the reclaimed material.

For example, the waste tire determination apparatus 1 is a stationary information processing apparatus such as a personal computer. It is noted that the waste tire determination apparatus 1 may be a portable information processing apparatus such as a notebook computer or a smartphone. In addition, the waste tire determination apparatus 1 is not limited to a general purpose information processing apparatus, but may be an apparatus specialized for the determination function.

As shown in FIG. 1, the waste tire determination apparatus 1 includes a control portion 11, an operation/display portion 12, a storage portion 13, a reading portion 14, and a communication portion 15.

The control portion 11 comprehensively controls the waste tire determination apparatus 1. As shown in FIG. 1, the control portion 11 includes a CPU 21, a ROM 22, and a RAM 23. The CPU 21 is a processor that executes various types of arithmetic processing. The ROM 22 is a nonvolatile storage device in which information, such as control programs for causing the CPU 21 to execute various processes, is preliminarily stored. The RAM 23 is a volatile or nonvolatile storage device that is used as a temporary storage memory (working area) for the various processes executed by the CPU 21. The CPU 21 executes the various control programs preliminarily stored in the ROM 22. This allows the CPU 21 to comprehensively control the waste tire determination apparatus 1.

The operation/display portion 12 is a user interface of the waste tire determination apparatus 1. The operation/display portion 12 includes a display portion and an operation portion. The display portion displays various types of information in accordance with control instructions from the control portion 11. For example, the display portion is a liquid crystal display. The operation portion inputs various types of information in accordance with operations of the user. For example, the operation portion is composed of operation keys or a touch panel.

The storage portion 13 is a nonvolatile storage device. For example, the storage portion 13 is a nonvolatile memory such as a flash memory, an SSD (Solid State Drive), or an HDD (Hard Disk Drive).

The storage portion 13 preliminarily stores a waste tire determination program for causing the control portion 11 to function as the processing portions shown in FIG. 1.

The reading portion 14 reads the tire identification information (an example of identification information of a waste tire of the present disclosure) from the wireless tag 201 (see FIG. 2) installed in the waste tire 200. As shown in FIG. 2, the reading portion 14 is a handy type RFID reader. The reading portion 14 includes an antenna that transmits electromagnetic waves of a predetermined particular frequency. When the wireless tag 201 is present in a predetermined communication range, the reading portion 14 uses the antenna to request the wireless tag 201 to transmit data so that the wireless tag 201 transmits data including the tire identification information. For example, the particular frequency is a frequency included in the UHF (Ultra High Frequency) band. In addition, the communication range is approximately one meter. It is noted that the reading portion 14 is not limited to the handy type RFID reader shown in FIG. 2. For example, the reading portion 14 may be a stationary RFID reader provided on a line of a sequence of devices that is described below.

The communication portion 15 is a communication interface for executing a data communication in a wireless or wired manner with an external communication apparatus such as the server 2 via the communication network.

The server 2 is a computer communicably connected with the waste tire determination apparatus 1 via the communication network.

As shown in FIG. 1, the server 2 includes a database 31. Specifically, the database 31 is stored in a storage device provided in the server 2.

The database 31 includes the tire information. Specifically, the tire information includes material configuration information concerning the material configuration of the waste tire 200. In addition, the tire information includes first grade information and second grade information that indicate grades determined based on a grading system specified by the Japan Automobile Tyre Manufacturers Association, Inc. The first grade information is information showing grades with regard to a rolling resistance coefficient of the waste tire 200 in a state of a brand-new tire. The second grade information is information showing grades with regard to a wet grip performance of the waste tire 200 in a state of a brand-new tire. In the database 31, the tire information is associated with the tire identification information and manufacturing year/month/day information that indicates the manufacturing year/month/day of the waste tire 200. It is noted that the tire information may include tire travel history information that is acquired by using, for example, a sensor installed within the tire. However, from the viewpoint of uniquely characterizing the waste tire 200 and preventing a complex classification, it is preferable that the tire information is established before the factory shipment of the waste tire 200. Here, "the factory shipment of the waste tire 200" means the shipment of a tire before becoming the waste tire 200 from a manufacturing factory of the tire.

Here, the material configuration information includes tire material information, mass information, and amount information that correspond to each member (hereinafter referred to as "waste tire configuration member") of the waste tire 200 such as a tread portion, a shoulder portion, a side wall portion, a bead portion, and an inner liner portion. The tire material information indicates names of tire materials contained in the waste tire configuration members. The mass information indicates the mass of each of the tire materials contained in the waste tire configuration members. The amount information indicates an amount of polymer component, an amount of carbon black component, and an amount of ash in compositions constituting the waste tire configuration members. It is noted that the amount of polymer component is a total amount of the above-mentioned polymer component, and is a total amount of rubber component and thermoplastic elastomer component. The amount of carbon black component is a total amount of carbon black contained in the compositions constituting the waste tire configuration member. The amount of ash is an amount of a component (ash) that remains after compositions, such as silica, zinc oxide, and aluminum hydroxide, included in the compositions constituting the waste tire configuration member are heated or burned at 750°C.

Here, a description is given of a method for acquiring the amount of polymer component, the amount of carbon black component, and the amount of ash in the compositions constituting the waste tire configuration member. Firstly, in conformance with JIS-K6229, test pieces are immersed in acetone for 72 hours to extract the soluble components; the mass of each of the test pieces before and after the extraction is measured; and the acetone extraction component amount is obtained by the following formula (1).

$$\text{Acetone extraction component amount (\%)} = \{(\text{mass of test piece before extraction} - \text{mass of test piece after extraction}) / (\text{mass of test piece before extraction})\} \times 100 \quad (1)$$

Secondly, with regard to samples that remain after the acetone extraction, in conformance with JIS-K6226-1:2003, the temperature is increased from the room temperature to 750°C under a nitrogen atmosphere, and the mass (%) of the reduced amount that is obtained when the organic matter is thermally decomposed and vaporized is acquired as the amount of polymer component. Thirdly, the weight (%) of the reduced amount that is obtained when they are burned by oxidation by heating in the air is acquired as the amount of carbon. Finally, the mass (%) of the component (ash) that has not been burned is acquired as the amount of ash. The total of the acquired amounts is 100% by mass.

In addition, the material configuration information may include information concerning a carcass layer reinforcing material, a belt layer reinforcing material, a material for reinforcing a belt reinforcing layer, a material for reinforcing a steel filler layer, and an organic fibrous material and a steel material that are used in the bead core or the like. For example, information concerning the organic fibrous material includes a name, a fineness, a twist count, and a wire diameter of a material forming the organic fibrous material. In addition, information concerning the steel material includes a grade and an element ratio of steel forming the steel material, a configuration of a plating layer, or the like.

The server 2, in response to a request from the waste tire determination apparatus 1, transmits data stored in the database 31 to the waste tire determination apparatus 1. Specifically, upon receiving a data transmission request including the tire identification information, the server 2 retrieves, from the database 31, the tire information and the manufacturing year/month/day information associated with the tire identification information. Subsequently, the server 2 transmits data including the retrieved tire information and manufacturing year/month/day information to the waste tire determination apparatus 1.

It is noted that the database 31 may be stored in the storage portion 13. In this case, the waste tire determination system 100A may not include the server 2. In addition, a part or all of the tire information may preliminarily be stored in the storage portion of the wireless tag 201 attached to the waste tire 200.

As shown in FIG. 1, the control portion 11 includes an acquisition processing portion 41, a determination processing portion 42, a decision processing portion 43, and an output processing portion 44.

Specifically, the control portion 11 functions as the acquisition processing portion 41, the determination processing portion 42, the decision processing portion 43, and the output processing portion 44 by executing the waste tire determination program stored in the storage portion 13. It is noted that a part or all of the processing portions included in the control portion 11 may be composed of an electronic circuit. In addition, the waste tire determination program may be a program for causing a plurality of processors to function as the various processing portions included in the control portion 11.

The acquisition processing portion 41 acquires the tire information.

Specifically, the acquisition processing portion 41 acquires the tire information and the manufacturing year/-month/day information based on the tire identification information read from the wireless tag 201.

For example, when the reading portion 14 has read the tire identification information of the waste tire 200 from the wireless tag 201, the acquisition processing portion 41 transmits the data transmission request including the tire identification information to the server 2. Subsequently, in response to the data transmission request, the server 2 transmits data including the tire information and the manufacturing year/month/day information, and the acquisition processing portion 41 receives the data. And the acquisition processing portion 41 acquires the tire information and the manufacturing year/month/day information from the data received from the server 2.

It is noted that the acquisition processing portion 41 may acquire the tire information and the manufacturing year/month/day information based on outer surface information recorded on the outer surface of the waste tire 200. For example, the outer surface information is: a one-dimensional barcode stuck on a side surface of the tire during manufacture of the tire before becoming the waste tire 200; display information showing a size and a pattern provided on the side wall portion of the tire; or two-dimensional barcode imprinted on the side wall portion. In this case, the waste tire determination apparatus 1 may include, instead of the reading portion 14, a camera that can photograph the outer surface information. In addition, the acquisition processing portion 41 may extract the tire identification information from a photographed image of the outer surface information acquired by using the camera, and acquire the tire information and the manufacturing year/month/day information based on the extracted tire identification information. In addition, the acquisition processing portion 41 may directly acquire the tire information and the manufacturing year/month/day information from the photographed image of the outer surface information acquired by using the camera. It is noted that there may be a case where it is difficult to acquire information from a photographed image due to dirt or friction of the outer surface depending on the travel history and specification situation of the waste tire 200. For this reason, it is preferable for the acquisition processing portion 41 to read the tire identification information of the waste tire 200 from the wireless tag 201. More preferably, the acquisition processing portion 41 may read the tire identification information from both the wireless tag 201 and the outer surface of the waste tire 200. For example, when the tire identification information read from the wireless tag 201 does not match the tire identification information read from the outer surface of the waste tire 200, the acquisition processing portion 41 calculates the matching rate between the two pieces of tire identification information that have been read. Thereafter, when the calculated matching rate is equal to or more than a predetermined determination reference value, the acquisition processing portion 41 determines that an information reading error has occurred due to dirt or the like of the outer surface of the waste tire 200, and determines that the tire identification information read from the wireless tag 201 is correct. In addition, when the calculated matching rate is less than the determination reference value, the acquisition processing portion 41 determines that there is a problem in the wireless tag 201, and determines that the tire identification information read from the outer surface of the waste tire 200 is correct. For example, as a problem in the wireless tag 201, an information input error may have occurred during registration of the tire identification information into the wireless tag 201. In addition, as a problem in the wireless tag 201, another wireless tag 201 different from the wireless tag 201 that should have been attached to the waste tire 200 may have been attached to the waste tire 200.

In addition, the tire information and the manufacturing year/month/day information may be preliminarily written in the wireless tag 201. In this case, the acquisition processing portion 41 may acquire the tire information and the manufacturing year/month/day information directly from the wireless tag 201.

The determination processing portion 42 determines, based on the tire information acquired by the acquisition processing portion 41, whether or not a part or all of the waste tire 200 is suitable as a raw material for the reclaimed material.

Specifically, the determination processing portion 42 determines, based on the material configuration information acquired by the acquisition processing portion 41, whether or not a part or all of the waste tire 200 is suitable as a raw material for the reclaimed material.

For example, the determination processing portion 42 determines, for each of the waste tire configuration members included in the waste tire 200, for which of the reclaimed thermoplastic elastomer or the reclaimed plasticizer, each waste tire configuration member is suitable as a raw material, based on the material configuration information acquired by the acquisition processing portion 41.

In addition, the determination processing portion 42 determines, for each of the waste tire configuration members included in the waste tire 200, whether or not each waste tire configuration member is suitable as a raw material for the rubber powder to be blended into tread, based on the material configuration information and the manufacturing year/month/day information acquired by the acquisition processing portion 41.

In addition, the determination processing portion 42 determines, for each of the waste tire configuration members included in the waste tire 200, whether or not each waste tire configuration member is suitable as a raw material for the rubber powder not to be blended into tread, based on the material configuration information and the manufacturing year/month/day information acquired by the acquisition processing portion 41.

In addition, the determination processing portion 42 determines, for each of the waste tire configuration members included in the waste tire 200, whether or not each waste tire configuration member is suitable as a raw material for the reclaimed carbon black, based on the material configuration information acquired by the acquisition processing portion 41.

In addition, the determination processing portion 42 determines, for each of the waste tire configuration members included in the waste tire 200, whether or not each waste tire configuration member is suitable as a raw material for the reclaimed monomer, based on the material configuration information acquired by the acquisition processing portion 41.

For example, with respect to a composition forming the waste tire configuration member, the determination processing portion 42 determines whether or not a ratio of thermoplastic elastomer contained in 100% by mass of polymer component exceeds 50% by mass, based on the material configuration information acquired by the acquisition processing portion 41. Here, upon determining that the ratio of thermoplastic elastomer exceeds 50% by mass, the determination processing portion 42 determines that the composition is a thermoplastic elastomer composition. In this case, the determination processing portion 42 determines that the waste tire configuration member formed by the thermoplastic elastomer composition is suitable as a raw material for the reclaimed thermoplastic elastomer. In addition, upon determining that the ratio of thermoplastic elastomer is equal to or less than 50% by mass, the determination processing portion 42 determines that the composition is a rubber composition. In this case, the determination processing portion 42 determines that the waste tire configuration member formed by the rubber composition is suitable as a raw material for the reclaimed plasticizer. It is noted that upon determining that the waste tire configuration member is suitable as a raw material for the reclaimed thermoplastic elastomer, the determination processing portion 42 may determine a type of a thermoplastic elastomer that is mainly contained in the waste tire configuration member. In this case, the waste tire configuration member determined as suitable as a raw material for the reclaimed thermoplastic elastomer may be classified for each type. In addition, upon determining that the waste tire configuration member is suitable as a raw material for the reclaimed plasticizer, the determination processing portion 42 may determine, based on the material configuration information, to which of a plurality of predetermined ratio ranges the configuration ratio of the rubber component contained in the waste tire configuration member corresponds. In this case, the waste tire configuration member determined as suitable as a raw material for the reclaimed plasticizer may be classified for each of the ratio ranges. In addition, criteria for determining for which of the reclaimed thermoplastic elastomer or the reclaimed plasticizer each waste tire configuration member is suitable as a raw material, are not limited to the above-mentioned ones.

In addition, the determination processing portion 42 determines, based on the material configuration information and the manufacturing year/month/day information acquired by the acquisition processing portion 41, whether or not the waste tire configuration member formed by the rubber composition satisfies both of two conditions: a condition that the time elapsed after manufacture is less than five years; and a condition that the ratio of butyl rubber (IIR) contained in 100% by mass of the rubber component is less than 5% by mass. Upon determining that both conditions are satisfied, the determination processing portion 42 determines that the waste tire configuration member is suitable as a raw material for the rubber powder to be blended into tread. In addition, upon determining that either or both of the two conditions are not satisfied, the determination processing portion 42 determines that the waste tire configuration member is not suitable as a raw material for the rubber powder to be blended into tread. Here, the tread portion of the tire is a member that comes in contact with the road surface, and when the deterioration of polymer component in the rubber powder to be blended into tread progresses, the performance of the tire manufactured by using the rubber powder to be blended into tread may be impaired. For this reason, when the time elapsed after manufacture of the waste tire configuration member formed by the rubber composition is five years or more, it is determined that the waste tire configuration member is not suitable as a raw material for the rubber powder to be blended into tread. In addition, butyl rubber has poor adhesiveness to other rubber components, and if butyl rubber is contained in large amount in the tread portion of the tire, an early wear or the like may be caused. For this reason, when, with respect to the waste tire configuration member formed by the rubber composition, the ratio of butyl rubber (IIR) contained in 100% by mass of the rubber component is 5% by mass or more, it is determined that the waste tire configuration member is not suitable as a raw material for the rubber powder to be blended into tread. That is, by manufacturing the rubber powder to be blended into tread by using the waste tire configuration member that satisfies both of the above-mentioned two conditions, it is possible to improve the quality of the manufactured rubber powder to be blended into tread. It is noted that upon determining that the waste tire configuration member is suitable as a raw material for the rubber powder to be blended into tread, the determination processing portion 42 may determine, based on the first grade information and the second grade information, to which of a plurality of groups having different combinations of grades of the tire rolling resistance coefficient and grades of the tire wet grip performance, the waste tire configuration member belongs. In this case, the waste tire configuration member determined as suitable as a raw material for the rubber powder to be blended into tread may be classified for each of the groups. This makes it possible to improve the quality of the manufactured rubber powder to be blended into tread. In addition, criteria for determining whether or not the waste tire configuration member is suitable as a raw material for the rubber powder to be blended into tread are not limited to the above-mentioned ones.

In addition, the determination processing portion 42 determines, based on the material configuration information and the manufacturing year/month/day information acquired by the acquisition processing portion 41, whether or not the waste tire configuration member formed by the rubber composition satisfies both of two conditions: a condition that the time elapsed after manufacture is five years or more and less than ten years; and a condition that the ratio of butyl rubber (IIR) contained in 100% by mass of the rubber component is 5% by mass or more and less than 10% by mass. Upon determining that both conditions are satisfied, the determination processing portion 42 determines that the waste tire configuration member is suitable as a raw material for the rubber powder not to be blended into tread. In addition, upon determining that either or both of the conditions are not satisfied, the determination processing portion 42 determines that the waste tire configuration member is not suitable as a raw material for the rubber powder not to be blended into tread. It is noted that upon determining that the waste tire configuration member is suitable as a raw material for the rubber powder not to be blended into tread, the determination processing portion 42 may determine, based on the first grade information and the second grade information, to which of a plurality of groups having different combinations of grades of the tire rolling resistance coefficient and grades of the tire wet grip performance, the waste tire configuration member belongs. In this case, the waste tire configuration member determined as suitable as a raw material for the rubber powder not to be blended into tread may be classified for each of the groups. This makes it possible to improve the quality of the manufactured rubber powder not to be blended into tread. In addition, criteria for determining whether or not the waste tire configuration member is suitable as a raw material for the rubber powder not to be blended into tread are not limited to the above-mentioned ones.

In addition, with respect to the waste tire configuration member formed by the rubber composition, the determination processing portion 42 determines, based on the material configuration information acquired by the acquisition processing portion 41, whether or not the ratio of ash contained in the rubber composition is less than 10% by mass. Here, upon determining that the ratio of ash contained in the rubber composition is less than 10% by mass, the determination processing portion 42 determines that the waste tire configuration member is suitable as a raw material for the reclaimed carbon black. In addition, upon determining that the ratio of ash contained in the rubber composition is 10% by mass or more, the determination processing portion 42 determines that the waste tire configuration member is not suitable as a raw material for the reclaimed carbon black. Here, it is difficult to remove the ash as impurities during the process of manufacturing the reclaimed carbon black using the waste tire configuration member. That is, by manufacturing the reclaimed carbon black by using the waste tire configuration member in which a small amount of ash is contained, it is possible to improve the quality of the manufactured reclaimed carbon black. In addition, it is considered that the component used as the raw material of the reclaimed carbon black is, unlike polymer or the like, hardly affected by deterioration with lapse of time. For this reason, during the process of determining whether or not the waste tire configuration member formed by the rubber composition is suitable as a raw material for the reclaimed carbon black, the time elapsed after manufacture is not considered. It is noted that upon determining that the waste tire configuration member is suitable as a raw material for the reclaimed carbon black, the determination processing portion 42 may determine, based on the material configuration information, a grade of a carbon black having the highest blending ratio among carbon blacks contained in the waste tire configuration member. In this case, the waste tire configuration member determined as suitable as a raw material for the reclaimed carbon black may be classified for each of the grades. This makes it possible to improve the quality of the manufactured reclaimed carbon black. In addition, criteria for determining whether or not the waste tire configuration member is suitable as a raw material for the reclaimed carbon black are not limited to the above-mentioned ones.

Here, the determination processing portion 42 may classify the waste tire configuration member determined as suitable as a raw material for the reclaimed carbon black, based on the configuration ratio of polymer component and the configuration ratio of plasticizer included in the material configuration information acquired by the acquisition processing portion 41. With such classification, it is possible to specify the monomer species of the monomer component obtained during the process of thermally decomposing the waste tire configuration member among the manufacturing steps of the reclaimed carbon black. As a result, it is possible to improve the quality of the reclaimed monomer that is manufactured by using a monomer component obtained during the process of thermally decomposing the waste tire configuration member, without classifying the monomer component. It is noted that a criterion for determining whether or not the waste tire configuration member is suitable as a raw material for the reclaimed monomer may be provided separately.

It is noted that the determination processing portion 42 may determine, based on the first grade information and the second grade information acquired by the acquisition processing portion 41, for which of a plurality of types of rubber powders to be blended into tread that have different performances, the tread portion of the waste tire 200 is suitable as a raw material. In this case, all the waste tire configuration members that are different from the tread portion of the waste tire 200 may be used as a raw material for the rubber powder not to be blended into tread. As understood from this, although it is possible to determine, based on information other than the material configuration information included in the tire information, whether or not a part or all of the waste tire 200 is suitable as a raw material for the reclaimed material, it is preferable, from the view point of improving the quality of the manufactured reclaimed material, to perform the determination based on the material configuration information.

In addition, the determination processing portion 42 may perform a determination concerning a non-elastomer member contained in the waste tire 200 based on the material configuration information and the manufacturing year/month/day information acquired by the acquisition processing portion 41. Here, the non-elastomer member includes the steel material and the organic fibrous material.

For example, the determination processing portion 42 may determine the grade of the steel material contained in the waste tire 200 based on the amount of carbon element in steel included in the material configuration information acquired by the acquisition processing portion 41. This makes it possible to uniform the amount of carbon element in the manufactured reclaimed steel by manufacturing the reclaimed steel by using steel materials of the same grade. As a result, it is possible to improve the manufactured reclaimed steel.

In addition, the determination processing portion 42 may determine, based on the manufacturing year/month/day information acquired by the acquisition processing portion 41, for which of a chemical recycle or a mechanical recycle the method for reclaiming the organic fibrous material contained in the waste tire 200 is suitable. For example, when the time elapsed after manufacture of the waste tire 200 is less than five years, the determination processing portion 42 determines that the reclaiming method suitable for the organic fibrous material contained in the waste tire 200 is the mechanical recycle. In this case, the determination processing portion 42 may classify the organic fibrous material contained in the waste tire 200 based on the material type of organic fibrous material included in the material configuration information acquired by the acquisition processing portion 41. In addition, when the time elapsed after manufacture of the waste tire 200 is five years or more, the determination processing portion 42 determines that the reclaiming method suitable for the organic fibrous material contained in the waste tire 200 is the chemical recycle. In this case, the determination processing portion 42 may classify the organic fibrous material contained in the waste tire 200 based on the material type of organic fibrous material included in the material configuration information acquired by the acquisition processing portion 41.

Here, the mechanical recycle refers to a recycling method in which to obtain reclaimed materials of the same type by subjecting the waste tire configuration member to a grinding process, a melting process or the like. In addition, the chemical recycle refers to a recycling method in which to obtain reclaimed materials of the same type or different types by chemically decomposing the waste tire configuration member by the operation of heat, enzyme or the like.

The decision processing portion 43 decides, based on the determination result of the determination processing portion 42, for which reclaimed material a part or all of the waste tire 200 is to be used as a raw material.

Specifically, when the determination processing portion 42 has determined that the waste tire configuration member is suitable as a raw material for one reclaimed material, the decision processing portion 43 decides to use the waste tire configuration member as a raw material for the one reclaimed material.

In addition, when the determination processing portion 42 has determined that the waste tire configuration member is suitable as a raw material for a plurality of reclaimed materials, the decision processing portion 43 decides one of the plurality of reclaimed materials for which the waste tire configuration member is to be used as a raw material, in accordance with priority orders that have preliminarily been established for the plurality of reclaimed materials.

In addition, when a total weight of a waste tire configuration member that had been determined as a raw material for a reclaimed material having the highest priority order has reached a multiple of the amount (weight) of raw material that is necessary for manufacture of the reclaimed material, the decision processing portion 43 changes the priority order of the reclaimed material to the lowest. With this configuration, upon a determination that the waste tire configuration member is suitable as a raw material for a plurality of reclaimed materials, it is possible to decide one of the plurality of reclaimed materials for which the waste tire configuration member is to be used as a raw material such that excess or shortage of a raw material for a reclaimed material does not occur.

It is noted that the decision processing portion 43 may not automatically change the priority orders established for the plurality of reclaimed materials. In addition, the decision processing portion 43 may change the priority orders established for the plurality of reclaimed materials in accordance with a predetermined user operation. In addition, when the determination processing portion 42 has determined that the waste tire configuration member is suitable as a raw material for a plurality of reclaimed materials, the decision processing portion 43 may randomly decide one of the plurality of reclaimed materials for which the waste tire configuration member is to be used as a raw material.

Here, upon deciding that the waste tire configuration member is to be used as a raw material for the reclaimed thermoplastic elastomer, the decision processing portion 43 decides, based on the material configuration information, a reuse condition of the reclaimed thermoplastic elastomer that is manufactured by using the waste tire configuration member.

For example, the reuse condition of the reclaimed thermoplastic elastomer is a maximum blending ratio with which the reclaimed thermoplastic elastomer is to be used in a new product.

For example, it is preferable that relational expression (2) shown below is satisfied, wherein "blending ratio (% by mass)" refers to the blending ratio (% by mass) of the reclaimed thermoplastic elastomer when it is reused, E denotes the content (% by mass) of the reclaimed thermoplastic elastomer in the reclaimed thermoplastic elastomer composition forming the waste tire configuration member, and Y denotes the elapsed years after manufacture of a reclaimed thermoplastic elastomer of the oldest generation among reclaimed thermoplastic elastomers contained in the thermoplastic elastomer composition. It is noted that the content E and the elapsed years Y only need to be included in the material configuration information.

$$\text{Blending ratio (\% by mass)} \leq 50 - 0.1 \times E \times Y \ \dots \ (2)$$

For example, when the thermoplastic elastomer composition forming the waste tire configuration member does not contain the reclaimed thermoplastic elastomer as thermoplastic elastomer component, the decision processing portion 43 decides that the reclaimed thermoplastic elastomer can be used up to 50% by mass as thermoplastic elastomer according to the relational expression (2). In addition, when the thermoplastic elastomer composition contains 50% by mass of the reclaimed thermoplastic elastomer as thermoplastic elastomer component, and the elapsed years after manufacture of a reclaimed thermoplastic elastomer of the oldest generation among reclaimed thermoplastic elastomers contained in the thermoplastic elastomer composition are four years, the decision processing portion 43 decides that the reclaimed thermoplastic elastomer can be used up to 30% by mass as thermoplastic elastomer according to the relational expression (2).

It is noted that when the blending ratio calculated by the relational expression (2) is zero or minus, it is preferably provided for the thermal recycle or the cascade recycle as a raw material for plastic since it is not suitable for use in the mechanical recycle. In addition, the process of deciding the reuse condition of the reclaimed thermoplastic elastomer may be executed by a processing portion different from the decision processing portion 43, or by a person.

In addition, upon deciding to use the waste tire configuration member as a raw material for the reclaimed plasticizer, the decision processing portion 43 decides a manufacture condition of the reclaimed plasticizer based on the material configuration information.

For example, the manufacture condition of the reclaimed plasticizer is a thermal decomposition temperature that is applied during the process of thermally decomposing the waste tire configuration member determined as suitable as a raw material for the reclaimed plasticizer.

For example, it is preferable that relational expression (3) shown below is satisfied, wherein R1 denotes a component ratio of diene-based rubber in polymer component and T1 denotes a thermal decomposition temperature (°C) that are applied when the reclaimed plasticizer is manufactured. This is because the higher the component ratio of diene-based rubber in polymer component is, the higher the possibility of recombination by radical generated during the thermal decomposition is, and it is necessary to decrease the thermal decomposition temperature for the recombination to be suppressed.

$$R1 \times T1 \leq 300 \ \dots \ (3)$$

For example, when, in the rubber composition forming the waste tire configuration member, the component ratio of diene-based rubber in polymer component is 0.8, the decision processing portion 43 decides the maximum thermal decomposition temperature to be 375°C according to the relational formula (3). In addition, when, in the rubber composition, the component ratio of diene-based rubber in polymer component is 1.0, the decision processing portion 43 decides the maximum thermal decomposition temperature to be 300°C according to the relational formula (3).

It is noted that when a plurality of waste tire configuration members are thermally decomposed collectively, the decision processing portion 43 may calculate the component ratio of diene-based rubber in polymer component that is substituted for the relational formula (3) based on: an amount of polymer component contained in each of the plurality of waste tire configuration members; a component ratio of diene-based rubber in polymer component contained in each of the plurality of waste tire configuration members; and a weight of each of the plurality of waste tire configuration members. Specifically, the decision processing portion 43 may use $(\sum P_i \times D_i \times W_i / 100) / \sum W_i$ to calculate the component ratio of diene-based rubber in polymer component that is substituted for the relational formula (3), wherein $P_i$ denotes an amount (% by mass) of polymer component contained in waste tire configuration member (i), $D_i$ denotes a component ratio (% by mass) of diene-based rubber contained in polymer component, and $W_i$ denotes a weight (g) of the waste tire configuration member (i). In addition, the process of deciding the manufacture condition of the reclaimed plasticizer may be executed by a processing portion different from the decision processing portion 43, or by a person.

In addition, upon deciding to use the waste tire configuration member as a raw material for the rubber powder to be blended into tread or the rubber powder not to be blended into tread, the decision processing portion 43 decides a manufacture condition of the rubber powder to be blended into tread or the rubber powder not to be blended into tread, based on the material configuration information.

For example, the manufacture condition of the rubber powder to be blended into tread or the rubber powder not to be blended into tread is an ambient temperature that is applied during the process of grinding the waste tire configuration member determined as suitable as a raw material for the rubber powder to be blended into tread or the rubber powder not to be blended into tread.

For example, it is preferable that relational expression (4) shown below is satisfied, wherein T2 denotes an ambient temperature (°C) when the waste tire configuration member is ground, and R2 denotes a ratio of content (% by mass) of carbon black in the rubber composition forming the waste tire configuration member. The reason for this is as follows. During grinding of the rubber composition, the rubber composition generates heat as a mechanical force is applied thereto by a grinding machine, and the rubber composition may be plasticized by the heat in such a way as not to be ground, wherein the more the content of carbon black in the rubber composition is, the more promptly the plasticization by the heat progresses.

$$T2 \leq 50-R2 \times 0.5 \ldots (4)$$

For example, when the ratio of content of carbon black in the rubber composition forming the waste tire configuration member is 10% by mass, the decision processing portion 43 decides the maximum ambient temperature during the grinding to be 45°C or less according to the relational formula (4). In addition, when the ratio of content of carbon black in the rubber composition is 40% by mass, the decision processing portion 43 decides the maximum ambient temperature during the grinding to be 30°C or less according to the relational formula (4).

In addition, from the viewpoint of increasing efficiency of grinding, it is more preferable that relational expression (5) shown below is satisfied, wherein T2 denotes an ambient temperature (°C) when the waste tire configuration member is ground, and R2 denotes a ratio of content (% by mass) of carbon black in the rubber composition forming the waste tire configuration member.

$$T2 \leq 25-R2 \times 0.5 \ldots (5)$$

It is noted that when a plurality of waste tire configuration members are ground collectively, the decision processing portion 43 may calculate the ratio of content of carbon black that is substituted for the relational formula (4) or (5) based on a ratio of content of carbon black contained in each of the plurality of waste tire configuration members and a weight of each of the plurality of waste tire configuration members. Specifically, the decision processing portion 43 may use $(\sum C_i \times W_i)/\sum W_i$ to calculate the ratio of content of carbon black that is substituted for the relational formula (4) or (5), wherein $C_i$ denotes a ratio of content of carbon black contained in the rubber component of waste tire configuration member (i), and $W_i$ denotes a weight of the waste tire configuration member (i). In addition, the process of deciding the manufacture condition of the rubber powder to be blended into tread or the rubber powder not to be blended into tread may be executed by a processing portion different from the decision processing portion 43, or by a person.

In addition, upon deciding to use the waste tire configuration member as a raw material for the reclaimed carbon black, the decision processing portion 43 decides a manufacture condition of the reclaimed carbon black based on the material configuration information.

For example, the manufacture condition of the reclaimed carbon black is a thermal decomposition temperature that is applied during the process of thermally decomposing the waste tire configuration member determined as suitable as a raw material for the reclaimed carbon black.

For example, it is preferable that relational expression (6) shown below is satisfied, wherein T3 denotes a thermal decomposition temperature (°C) and R3 denotes a ratio of content (% by mass) of carbon black in the rubber composition forming the waste tire configuration member. This is because carbon black has a high thermal conductivity among materials of the rubber composition, wherein the lower the ratio of content thereof is, the lower the thermal conduction during the thermal decomposition process is, and the manufacture efficiency of the reclaimed carbon black is decreased.

$$T3 \geq 600-R3 \times 2.5 \ldots (6)$$

For example, when the ratio of content of carbon black in the rubber composition forming the waste tire configuration member is 40% by mass, the decision processing portion 43 decides the minimum thermal decomposition temperature to be 500°C according to the relational formula (6). In addition, when the ratio of content of carbon black in the rubber composition is 20% by mass, the decision processing portion 43 decides the minimum thermal decomposition temperature to be 550°C according to the relational formula (6).

Here, in a case where thermal decomposition is performed by heating by microwave irradiation during the process of thermally decomposing the waste tire configuration member determined as suitable as a raw material for the reclaimed carbon black, it is preferable that relational expression (7) shown below is satisfied, wherein T4 denotes a thermal decomposition temperature (°C) and R4 denotes a ratio of content (% by mass) of carbon black in the rubber composition forming the waste tire configuration member. This is because microwave irradiation can improve the kinetic property of molecules in the rubber composition, allowing the decomposition to be progressed at a lower temperature than a thermal decomposition using a heating method different from the microwave irradiation.

$$T4 \geq 350-R4x2.5 \ldots (7)$$

For example, in a case where the thermal decomposition is performed by microwave irradiation, when the ratio of content of carbon black in the rubber composition forming the waste tire configuration member is 40% by mass, the decision processing portion 43 decides the minimum thermal decomposition temperature to be 250°C according to the relational formula (7). In addition, when the ratio of content of carbon black in the rubber composition is 20% by mass, the decision processing portion 43 decides the minimum thermal decomposition temperature to be 300°C according to the relational formula (7).

It is noted that a carbon black component acquired in the above-described thermal decomposition process may be used as the reclaimed carbon black as is, or a surface treatment may be applied to the acquired carbon black component before it is used as the reclaimed carbon black.

In addition, upon deciding to use the waste tire configuration member as a raw material for the reclaimed monomer, the decision processing portion 43 decides a manufacture condition of the monomer based on the material configuration information.

The reclaimed monomer can be acquired by recovering monomer component such as rubber component and plasticizer component that are generated during a thermal decomposition process included in the manufacture processes of the reclaimed carbon black. For this reason, the thermal decomposition temperature that is applied during the process of thermally decomposing the waste tire configuration member when the reclaimed monomer is acquired, may be decided to satisfy the relational expression (6) or (7), as is the case with the reclaimed carbon black.

The reclaimed monomer may be manufactured at the same time as the reclaimed carbon black is manufactured, or may be manufactured solely for the purpose of acquiring the reclaimed monomer.

It is noted that when a plurality of waste tire configuration members are thermally decomposed collectively, the decision processing portion 43 may calculate the ratio of content of carbon black that is substituted for the relational formula (6) or the relational formula (7), based on: a ratio of content of carbon black contained in each of the plurality of waste tire configuration members; and a weight of each of the plurality of waste tire configuration members. Specifically, the decision processing portion 43 may use $(\sum C_i \times W_i)/\sum W_i$ to calculate the ratio of content of carbon black that is substituted for the relational formula (6), wherein $C_i$ denotes a ratio of content of carbon black contained in the rubber component of waste tire configuration member (i), and $W_i$ denotes a weight of the waste tire configuration member (i). In addition, the process of deciding the manufacture condition of the reclaimed carbon black may be executed by a processing portion different from the decision processing portion 43, or by a person.

In addition, upon determining that the reclaiming method suitable for the organic fibrous material contained in the waste tire 200 is the chemical recycle, the decision processing portion 43 decides a temperature condition for decomposing the organic fibrous material based on the material configuration information.

For example, the organic fibrous material can be hydrolyzed by using hydrolase to improve the reaction efficiency. Here, it is preferable that hydrolytic temperature (°C) and glass transition temperature (°C) of the organic fibrous material satisfy relational expression (8) shown below. When the hydrolytic temperature is near the glass transition temperature of the organic fibrous material, the kinetic property of molecules forming the organic fibrous material is improved and the reaction efficiency is improved. In addition, when the hydrolytic temperature is excessively high, hydrolase is deactivated and the reaction efficiency is decreased. For this reason, it is preferable that the hydrolytic temperature is near the glass transition temperature of the organic fibrous material.

Glass transition temperature of the organic fibrous material + 30°C ≥ hydrolytic temperature (°C) ≥ glass transition temperature of the organic fibrous material - 30°C　　　　(8)

For example, when glass transition temperature of the organic fibrous material forming the waste tire configuration member is 75°C, the decision processing portion 43 decides hydrolytic temperature to be a temperature in a range between 45°C or more and 105°C or less according to the relational expression (8).

The output processing portion 44 outputs the decision result of the decision processing portion 43.

For example, when the decision processing portion 43 has decided that the waste tire configuration member is to be used as a raw material for the reclaimed thermoplastic elastomer, the output processing portion 44 displays, on the operation/display portion 12, a message indicating that the waste tire configuration member belongs to group A. In this case, the output processing portion 44 displays, on the operation/display portion 12, a message indicating a reuse condition of the reclaimed thermoplastic elastomer decided by the decision processing portion 43.

In addition, when the decision processing portion 43 has decided that the waste tire configuration member is to be used as a raw material for the reclaimed plasticizer, the output processing portion 44 displays, on the operation/display portion 12, a message indicating that the waste tire configuration member belongs to group B. In this case, the output processing portion 44 displays, on the operation/display portion 12, a message indicating a manufacture condition of the reclaimed plasticizer decided by the decision processing portion 43.

In addition, when the decision processing portion 43 has decided that the waste tire configuration member is to be used as a raw material for the rubber powder to be blended into tread, the output processing portion 44 displays, on the operation/display portion 12, a message indicating that the waste tire configuration member belongs to group C. In this case, the output processing portion 44 displays, on the operation/display portion 12, a message indicating a manufacture condition of the rubber powder to be blended into tread decided by the decision processing portion 43.

In addition, when the decision processing portion 43 has decided that the waste tire configuration member is to be used as a raw material for the rubber powder not to be blended into tread, the output processing portion 44 displays, on the operation/display portion 12, a message indicating that the waste tire configuration member belongs to group D. In this case, the output processing portion 44 displays, on the operation/display portion 12, a message indicating a manufacture condition of the rubber powder not to be blended into tread decided by the decision processing portion 43.

In addition, when the decision processing portion 43 has decided that the waste tire configuration member is to be used as a raw material for the reclaimed carbon black, the output processing portion 44 displays, on the operation/display portion 12, a message indicating that the waste tire configuration member belongs to group E. In this case, the output processing portion 44 displays, on the operation/display portion 12, a message indicating a manufacture condition of the reclaimed carbon black decided by the decision processing portion 43. In addition, when the reclaimed monomer and the reclaimed carbon black are manufactured simultaneously, a message indicating an expected monomer component yield may be displayed on the operation/display portion 12.

In addition, when it has been determined that the waste tire configuration member is not suitable as a raw material for any of the reclaimed thermoplastic elastomer, the reclaimed plasticizer, the rubber powder to be blended into tread, the rubber powder not to be blended into tread, and the reclaimed carbon black, the output processing portion 44 displays, on the operation/display portion 12, a message indicating that the waste tire configuration member belongs to group F.

In addition, in a case where the reclaimed steel is manufactured based on the steel material contained in the waste tire 200, when the determination processing portion 42 has determined the grade of the steel material, the output processing portion 44 may display the grade on the operation/display portion 12. In addition, in a case where the reclaimed organic fibrous material is manufactured based on the organic fibrous material contained in the waste tire 200, when the determination processing portion 42 has classified the organic fibrous material, the output processing portion 44 may display the classification result on the operation/display portion 12.

It is noted that the output processing portion 44 may output the decision result of the decision processing portion 43 to an external information processing apparatus communicably connected with the waste tire determination apparatus 1. For example, the output processing portion 44 may store the decision result of the decision processing portion 43 in a storage device of a server different from the server 2. In addition, the output processing portion 44 may display the decision result of the decision processing portion 43 on a display portion of a predetermined mobile terminal.

[Waste tire determination process]

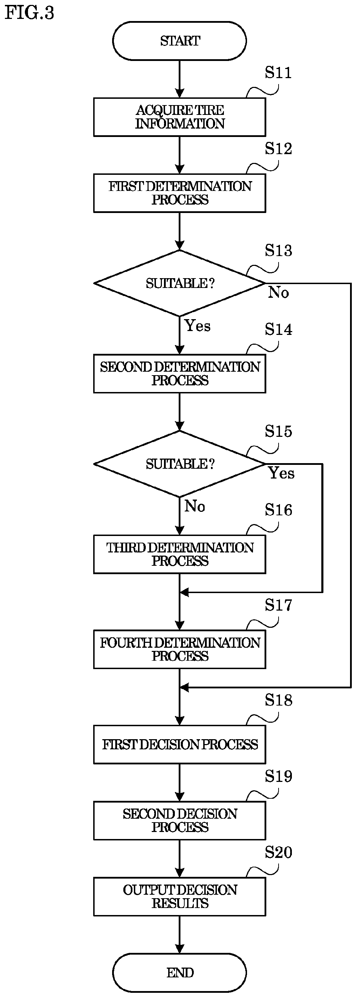

In the following, with reference to FIG. 3, a description is given of an example of the procedure of a waste tire determination process executed by the control portion 11 of the waste tire determination apparatus 1. Here, steps S11, S12, ... represent numbers assigned to the processing procedures (steps) executed by the control portion 11.

It is noted that the waste tire determination process is executed when the reading portion 14 has read the tire identification information from the wireless tag 201 of the waste tire 200.

<Step S11>

First, in step S11, the control portion 11 acquires the tire information based on the tire identification information read by the reading portion 14. Here, the process of step S11 is an example of an acquisition step of the present disclosure, and is executed by the acquisition processing portion 41 of the control portion 11.

Specifically, the control portion 11 transmits a data transmission request including the tire identification information to the server 2. Subsequently, the control portion 11 receives data including the tire information and the manufacturing year/month/day information that has been transmitted from the server 2 in response to the data transmission request. And the control portion 11 acquires the tire information and the manufacturing year/month/day information from the data received from the server 2.

The processes of step S12 to step S20 shown below are executed for each of the waste tire configuration members included in the waste tire 200.

<Step S12>

In step S12, the control portion 11 executes a first determination process to determine for which of the reclaimed thermoplastic elastomer or the reclaimed plasticizer the waste tire configuration member is suitable as a raw material, based on the material configuration information acquired in the process of step S11.

Specifically, in the first determination process, when, with respect to a composition forming the waste tire configuration member, a ratio of thermoplastic elastomer contained in 100% by mass of polymer component exceeds 50% by mass, it is determined that the composition is a thermoplastic elastomer composition and that it is suitable as a raw material for the reclaimed thermoplastic elastomer. In addition, in the first determination process, when, with respect to the composition, a ratio of thermoplastic elastomer contained in 100% by mass of polymer component is 50% by mass or less, it is determined that the composition is a rubber composition and is suitable as a raw material for the reclaimed plasticizer.

<Step S13>

In step S13, the control portion 11 determines the next process to perform depending on the result of the first determination process. Specifically, upon determining in the first determination process that the waste tire configuration member is suitable as a raw material for the reclaimed plasticizer (Yes side at S13), the control portion 11 starts to perform the process of step S14. In addition, upon determining in the first determination process that the waste tire configuration member is not suitable as a raw material for the reclaimed plasticizer, namely determining that the waste tire configuration member is suitable as a raw material for the reclaimed thermoplastic elastomer (No side at S13), the control portion 11 starts to perform the process of step S18.

<Step S14>

In step S14, the control portion 11 executes a second determination process to determine, based on the material configuration information and the manufacturing year/month/day information acquired in the process of step S11, whether or not the waste tire configuration member is suitable as a raw material for the rubber powder to be blended into tread.

Specifically, in the second determination process it is determined that the waste tire configuration member is suitable as a raw material for the rubber powder to be blended into tread when the waste tire configuration member satisfies both of two conditions: a condition that the time elapsed after manufacture is less than five years; and a condition that the ratio of butyl rubber (IIR) contained in 100% by mass of rubber component is less than 5% by mass. In addition, in the second determination process, it is determined that the waste tire configuration member is not suitable as a raw material for the rubber powder to be blended into tread when the waste tire configuration member does not satisfy either or both of the two conditions.

<Step S15>

In step S15, the control portion 11 determines the next process to perform depending on the result of the second determination process. Specifically, upon determining in the second determination process that the waste tire configuration member is suitable as a raw material for the rubber powder to be blended into tread (Yes side at S15), the control portion 11 starts to perform the process of step S17. In addition, upon determining in the second determination process that the waste tire configuration member is not suitable as a raw material for the rubber powder to be blended into tread (No side at S15), the control portion 11 starts to perform the process of step S16.

<Step S16>

In step S16, the control portion 11 executes a third determination process to determine, based on the material configuration information and the manufacturing year/month/day information acquired in the process of step S11, whether or not the waste tire configuration member is suitable as a raw material for the rubber powder not to be blended into tread.

Specifically, in the third determination process, it is determined that the waste tire configuration member is suitable as a raw material for the rubber powder not to be blended into tread when the waste tire configuration member satisfies both of two conditions: a condition that the time elapsed after manufacture is five years or more and less than ten years; and a condition that the ratio of butyl rubber (IIR) contained in 100% by mass of rubber component is 5% by mass or more and less than 10% by mass. In addition, in the third determination process, it is determined that the waste tire configuration member is not suitable as a raw material for the rubber powder not to be blended into tread when the waste tire configuration member does not satisfy either or both of the two conditions.

<Step S17>

In step S17, the control portion 11 executes a fourth determination process to determine, based on the material configuration information acquired in the process of step S11, whether or not the waste tire configuration member is suitable as a raw material for the reclaimed carbon black. Here, the processes of step S12, step S14, step S16, and step S17 are an example of a determination step of the present disclosure and are executed by the determination processing portion 42 of the control portion 11.

Specifically, in the fourth determination process, it is determined that the waste tire configuration member is suitable as a raw material for the reclaimed carbon black when the ratio of content of ash contained in the waste tire configuration member is less than 10% by mass. In addition, in the fourth determination process, it is determined that the waste tire configuration member is not suitable as a raw material for the reclaimed carbon black when the ratio of content of ash contained in the waste tire configuration member is 10% by mass or more.

It is noted that after the process of step S17, the control portion 11 may execute a process to classify the waste tire configuration member determined in the process of step S17 as suitable as a raw material for the reclaimed carbon black, based on the configuration ratio of polymer component and the configuration ratio of plasticizer included in the material configuration information acquired in the process of step S11.

In addition, before the process of step S18, the control portion 11 may determine the grade of the steel material contained in the waste tire 200 based on a carbon element content of steel included in the material configuration information acquired in the process of step S11. In addition, before the process of step S18, the control portion 11 may determine, based on the manufacturing year/month/day information acquired in the process of step S11, for which of a chemical recycle or a mechanical recycle the method for reclaiming the organic fibrous material contained in the waste tire 200 is suitable. In addition, when the method for reclaiming the organic fibrous material is determined, the control portion 11 may classify the organic fibrous material based on the material type of organic fibrous material included in the material configuration information acquired in the process of step S11.

<Step S18>

In step S18, the control portion 11 executes a first decision process to decide, based on the results of the processes up to step S18, for which reclaimed material the waste tire configuration member is to be used as a raw material.

Specifically, in the first decision process, when it has been determined in the processes up to step S18 that the waste tire configuration member is suitable as a raw material for one reclaimed material, it is decided that the waste tire configuration member is to be used as a raw material for the one reclaimed material. In addition, in the first decision process, when it has been determined in the processes up to step S18 that the waste tire configuration member is suitable as a raw material for a plurality of reclaimed materials, one of the plurality of reclaimed materials for which the waste tire configuration member is to be used as a raw material is decided, in accordance with priority orders that have preliminarily been established for the plurality of reclaimed materials. It is noted that two types of reclaimed materials, such as the reclaimed carbon black and the reclaimed plasticizer, can be manufactured simultaneously from one same waste tire configuration member by adjusting the manufacture processes. As a result, when it has been determined that the waste tire configuration member is suitable as a raw material for two types of reclaimed materials that can be manufactured simultaneously, it may be decided that the waste tire configuration member is to be used as a raw material for the two types of reclaimed materials.

<Step S19>

In step S19, the control portion 11 executes a second decision process to decide a reuse condition of the reclaimed thermoplastic elastomer or a manufacture condition of the reclaimed material based on the material configuration information acquired in the process of step S11. Here, the processes of step S18 and step S19 are executed by the decision processing portion 43 of the control portion 11.

Specifically, when it has been decided in the first decision process that the waste tire configuration member is to be used as a raw material for the reclaimed thermoplastic elastomer, the control portion 11 decides, according to the relational expression (2), a maximum blending ratio by which the reclaimed thermoplastic elastomer manufactured by using the waste tire configuration member is to be used in a new product.

In addition, when it has been decided in the first decision process that the waste tire configuration member is to be used as a raw material for the reclaimed plasticizer, the control portion 11 decides, according to the relational expression (3), the thermal decomposition temperature that is applied during the process of thermally decomposing the waste tire configuration member, among manufacture processes of the reclaimed plasticizer using the waste tire configuration member. In addition, the control portion 11 records: a weight of the waste tire configuration member; an amount of polymer component contained in the waste tire configuration member; and a component ratio of diene-based rubber in polymer component contained in the waste tire configuration member. The recorded data is used for changing the priority orders, and for calculating an average value when a plurality of waste tire configuration members are thermally decomposed collectively.

In addition, when it has been decided in the first decision process that the waste tire configuration member is to be used as a raw material for the rubber powder to be blended into tread or the rubber powder not to be blended into tread, the control portion 11 decides, according to the relational expression (4) or the relational expression (5), an ambient temperature that is applied during the process of grinding the waste tire configuration member, among manufacture processes of the rubber powder to be blended into tread or the rubber powder not to be blended into tread using the waste tire configuration member. In addition, the control portion 11 records: a weight of the waste tire configuration member; and a ratio of content of carbon black contained in the waste tire configuration member. The recorded data is used for changing the priority orders, and for calculating an average value when a plurality of waste tire configuration members are ground collectively.

In addition, when it has been decided in the first decision process that the waste tire configuration member is to be used as a raw material for the reclaimed carbon black, the control portion 11 decides, according to the relational expression (6) or the relational expression (7), a thermal decomposition temperature that is applied during the process of thermally decomposing the waste tire configuration member, among manufacture processes of the reclaimed carbon black using the waste tire configuration member. In addition, the control portion 11 records: a weight of the waste tire configuration member; and a ratio of content of carbon black contained in the waste tire configuration member. The recorded data is used for changing the priority orders, and for calculating an average value when a plurality of waste tire configuration members are thermally decomposed collectively.

In addition, when it has been determined before the process of step S18 that the reclaiming method suitable for the organic fibrous material contained in the waste tire 200 is the chemical recycle, the control portion 11 decides, according the relational expression (8), a hydrolytic temperature that is applied when the organic fibrous material is hydrolyzed.

<Step S20>

In step S20, the control portion 11 outputs the decision results of the first decision process and the second decision process.

Specifically, when it has been decided in the first decision process that the waste tire configuration member is to be used as a raw material for the reclaimed thermoplastic elastomer, the control portion 11 displays, on the operation/display portion 12, a message indicating that the waste tire configuration member belongs to group A. In this case, the control portion 11 displays, on the operation/display portion 12, a message indicating a reuse condition of the reclaimed thermoplastic elastomer decided in the second decision process.

In addition, when it has been decided in the first determination process that the waste tire configuration member is to be used as a raw material for the reclaimed plasticizer, the control portion 11 displays, on the operation/display portion 12, a message indicating that the waste tire configuration member belongs to group B. In this case, the control portion 11 displays, on the operation/display portion 12, a message indicating a manufacture condition of the reclaimed plasticizer decided in the second determination process.

In addition, when it has been decided in the first determination process that the waste tire configuration member is to be used as a raw material for the rubber powder to be blended into tread, the control portion 11 displays, on the operation/display portion 12, a message indicating that the waste tire configuration member belongs to group C. In this case, the control portion 11 displays, on the operation/display portion 12, a message indicating a manufacture condition of the rubber powder to be blended into tread decided in the second determination process.

In addition, when it has been decided in the first determination process that the waste tire configuration member is to be used as a raw material for the rubber powder not to be blended into tread, the control portion 11 displays, on the operation/display portion 12, a message indicating that the waste tire configuration member belongs to group D. In this case, the control portion 11 displays, on the operation/display portion 12, a message indicating a manufacture condition of the rubber powder not to be blended into tread decided in the second determination process.

In addition, when it has been decided in the first determination process that the waste tire configuration member is to be used as a raw material for the reclaimed carbon black, the control portion 11 displays, on the operation/display portion 12, a message indicating that the waste tire configuration member belongs to group E. In this case, the control portion 11 displays, on the operation/display portion 12, a message indicating a manufacture condition of the reclaimed carbon black decided in the second determination process and an expected monomer component yield.

As described above, the waste tire determination system 100A can execute the acquisition step, the determination step, and the decision step included in the waste tire determination method according to the embodiment of the present disclosure.

It is noted that the acquisition step, the determination step, and the decision step may be executed by a person.

[Reclaimed material manufacturing method]

Next, a description is given of the reclaimed material manufacturing method according to the embodiment of the present disclosure.

The reclaimed material manufacturing method according to the embodiment of the present disclosure includes each step of the above-described waste tire determination method, a decomposition step, a classification step, and a first manufacturing step.

In the decomposition step, the waste tire 200 is decomposed into a plurality of waste tire configuration members included in the waste tire 200.

Specifically, in the decomposition step, the waste tire 200 is cut such that the waste tire 200 is decomposed into a plurality of waste tire configuration members included in the waste tire 200. The decomposition step is executed by a person or a tire cutting machine operated by a person.

In the classification step, the plurality of waste tire configuration members acquired in the decomposition step are each classified into any one of a plurality of groups that correspond to a plurality of reclaimed materials, based on the decision result of the decision step.

Specifically, in the classification step, the waste tire configuration member is classified into any one of the groups A, B, C, D, E, and F based on the contents displayed in the process of step S20 of the waste tire determination process. The classification step is executed by a person.

[First manufacturing step]

In the first manufacturing step, the reclaimed material is manufactured by using the waste tire configuration member that has been decided as a raw material for the reclaimed material in the decision step.

Specifically, in the first manufacturing step, the reclaimed material corresponding to one of the plurality of groups is manufactured by using the waste tire configuration member that belongs to the group. It is noted that in the first manufacturing step, although it is preferable that only the waste tire configuration members classified in the classification step are used as raw materials, other chemicals for improving processability or performance may be added as needed by manufacture processes. In addition, in the first manufacturing step, a raw material that has been obtained from a material other than the waste tire 200 and has been determined as being able to be processed simultaneously may be mixed.

That is, in the first manufacturing step, the reclaimed thermoplastic elastomer is manufactured by using the waste tire configuration members belonging to the group A.

For example, the reclaimed thermoplastic elastomer is manufactured by melting the waste tire configuration member by a biaxial extruder or the like, and then molding the melt into pellets. It is noted that the method for manufacturing the reclaimed thermoplastic elastomer is not limited to the above-described one, but a conventionally well-known method may be used.

It is noted that the reclaimed thermoplastic elastomer manufactured by the first manufacturing step is preferably used in accordance with the reuse condition of the reclaimed thermoplastic elastomer output in the process of step S20 of the waste tire determination method.

In addition, in the first manufacturing step, the reclaimed plasticizer is manufactured by using the waste tire configuration members belonging to the group B.

The first manufacturing step of manufacturing the reclaimed plasticizer includes a first thermal decomposition step of thermally decomposing a part or all of the waste tire 200 determined as suitable as a raw material for the reclaimed plasticizer. In addition, the first manufacturing step of manufacturing the reclaimed plasticizer includes a first recovery step of recovering at least a part of a decomposed product acquired in the first thermal decomposition step. For example, in the first thermal decomposition step, the waste tire configuration member is heated at a temperature of 150°C or more, with a nitrogen-containing compound, such as aniline, nitrobenzene, dinitrobenzene, benzonitrile, phthalonitrile, or nitrobenzonitrile, used as a reaction solvent. This allows the rubber composition to be decomposed, and the reclaimed plasticizer is manufactured as liquified hydrocarbon. It is noted that the method for manufacturing the reclaimed plasticizer is not limited to the above-described one, but a conventionally well-known method may be used.

Here, in the first manufacturing step of manufacturing the reclaimed plasticizer, it is preferable that the manufacturing is performed in accordance with the manufacture condition of the reclaimed plasticizer output in the process of step S20 of the waste tire determination method. That is, it is preferable that the thermal decomposition temperature in the first thermal decomposition step, and the component ratio of diene-based rubber in polymer component in a part or all of the waste tire 200 that is thermally decomposed, satisfy the above-described relational expression (3).

In addition, in the first manufacturing step, the rubber powder to be blended into tread is manufactured by using the waste tire configuration members belonging to the group C.

The first manufacturing step of manufacturing the rubber powder to be blended into tread includes a grinding step of grinding a part or all of the waste tire 200 determined as suitable as a raw material for the rubber powder to be blended into tread. For example, in the grinding step, the waste tire configuration member is charged to a grinding machine such as a roll or a mixer, and is ground. The ground product of the waste tire configuration member acquired in the grinding step is screened on a sifter mesh to be sorted depending on the particle size. This manufactures the rubber powder to be blended into tread. It is noted that the method for manufacturing the rubber powder to be blended into tread is not limited to the above-described one, but a conventionally well-known method may be used.

Here, in the first manufacturing step of manufacturing the rubber powder to be blended into tread, it is preferable that the manufacturing is performed in accordance with the manufacture condition of the rubber powder to be blended into tread output in the process of step S20 of the waste tire determination method. That is, it is preferable that the ambient temperature during grinding in the grinding step and the ratio of content of carbon black in a part or all of the waste tire 200 satisfy the above-described relational expression (4).

In addition, in the first manufacturing step, the rubber powder not to be blended into tread is manufactured by using the waste tire configuration members belonging to the group D.

For example, the rubber powder not to be blended into tread is manufactured by the same method as that for the rubber powder to be blended into tread.

Here, in the first manufacturing step of manufacturing the rubber powder not to be blended into tread, it is preferable that the manufacturing is performed in accordance with the manufacture condition of the rubber powder not to be blended into tread output in the process of step S20 of the waste tire determination method.

In addition, in the first manufacturing step, the reclaimed carbon black is manufactured by using the waste tire configuration members belonging to the group E.

The first manufacturing step of manufacturing the reclaimed carbon black includes a second thermal decomposition step of thermally decomposing a part or all of the waste tire 200 determined as suitable as a raw material for the reclaimed carbon black. In addition, the first manufacturing step of manufacturing the reclaimed carbon black includes a second recovery step of recovering at least a part of the decomposed product acquired in the second thermal decomposition step. For example, in the second thermal decomposition step, the waste tire configuration member is thermally decomposed by burning or microwave irradiation. And the reclaimed carbon black is manufactured by removing unnecessary substances from carbide acquired in the second thermal decomposition step. It is noted that the method for manufacturing the reclaimed carbon black is not limited to the above-described one, but a conventionally well-known method may be used.

Here, in the first manufacturing step of manufacturing the reclaimed carbon black, it is preferable that the manufacturing is performed in accordance with the manufacture condition of the reclaimed carbon black output in the process of step S20 of the waste tire determination method. That is, it is preferable that the thermal decomposition temperature in the second thermal decomposition step in which thermal decomposition is performed by burning, and the ratio of content of carbon black in a part or all of the waste tire 200, satisfy the above-described relational expression (6). In addition, it is preferable that the thermal decomposition temperature in the second thermal decomposition step in which thermal decomposition is performed by microwave irradiation, and the ratio of content of carbon black in a part or all of the waste tire 200, satisfy the above-described relational expression (7).

It is noted that a carbon black component acquired by the above-described thermal decomposition may be used as the reclaimed carbon black as is, or a surface treatment may be applied to the acquired carbon black component before it is used as the reclaimed carbon black.

In addition, the reclaimed monomer may be acquired by recovering monomer components such as a rubber component and a plasticizer component that are generated when the reclaimed carbon black is manufactured. It is possible to use the acquired reclaimed monomer as a material for polymer and plasticizer by polymerizing it by a well-known method. In addition, a thermal decomposition may be performed solely for the purpose of acquiring the reclaimed monomer on condition that the relational expression (6) or (7) is satisfied.

From the viewpoint of increasing efficiency of work, the above-described thermal decomposition process may be performed after the waste tire configuration member is ground. In addition, the above-described thermal decomposition process may be performed without grinding the waste tire configuration member.

It is noted that in the first manufacturing step, a hydrolysis treatment for performing the chemical recycle may be carried out on the organic fibrous materials contained in the waste tire configuration members belonging to each group. It is preferable that the hydrolysis treatment temperature during the hydrolysis treatment satisfies the relational expression (8). The reclaimed monomer of the organic fibrous material generated by the chemical recycle may be polymerized again by a well-known method and spun as the reclaimed organic fibrous material.

It is noted that when any one of the plurality of groups includes a plurality of types of waste tire configuration members having different manufacture conditions, the first manufacturing step may be executed for each set of waste tire configuration members that have a manufacture condition in common.

In addition, in the first manufacturing step, rubber chips are manufactured by using the waste tire configuration members belonging to the group F. The rubber chips are used as a raw material for a rubber product, such as a rubber mat, different from the tire. For example, the rubber chips are manufactured by crushing the waste tire 200. It is noted that the waste tire configuration members belonging to the group F may be used as fuel.

As described above, in the reclaimed material manufacturing method according to the embodiment of the present disclosure, it is determined, based on the tire information, whether or not the waste tire configuration member is suitable as a raw material for the reclaimed material. And the reclaimed material is manufactured by using the waste tire configuration member determined as suitable as a raw material for the reclaimed material. This makes it possible to manufacture the reclaimed material by using only the waste tire configuration member that is suitable as a raw material for the reclaimed material. Accordingly, compared with a conventional technique where various types of waste tires 200 are processed collectively without distinction, it is possible to improve the quality of the reclaimed material.

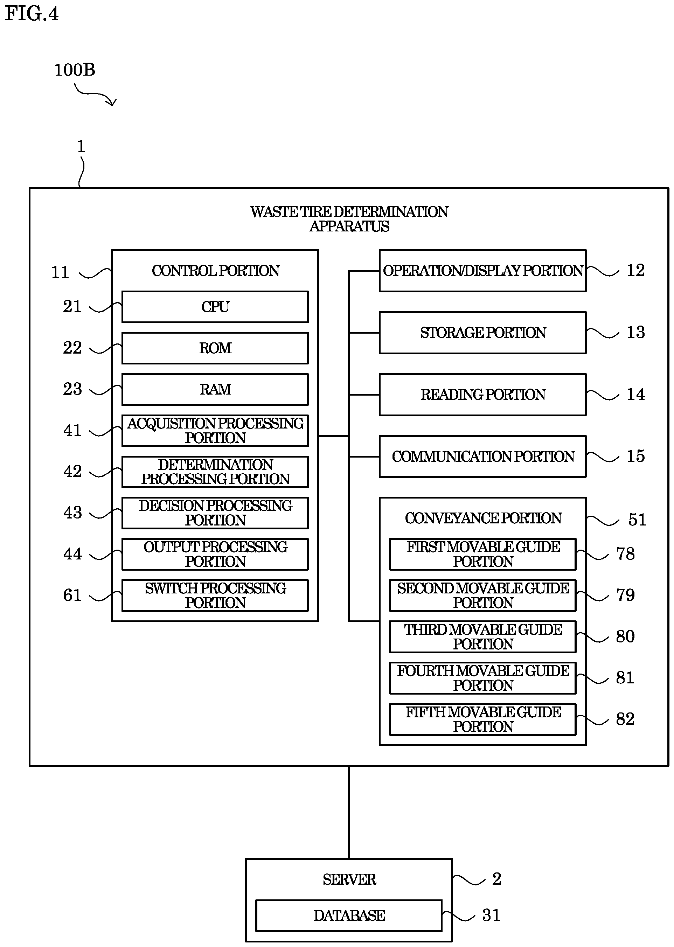

It is noted that the acquisition step, the determination step, the decision step, and the classification step included in the reclaimed material manufacturing method according to the embodiment of the present disclosure may be executed by a waste tire determination system 100B shown in FIG. 4.

[Waste tire determination system 100B]

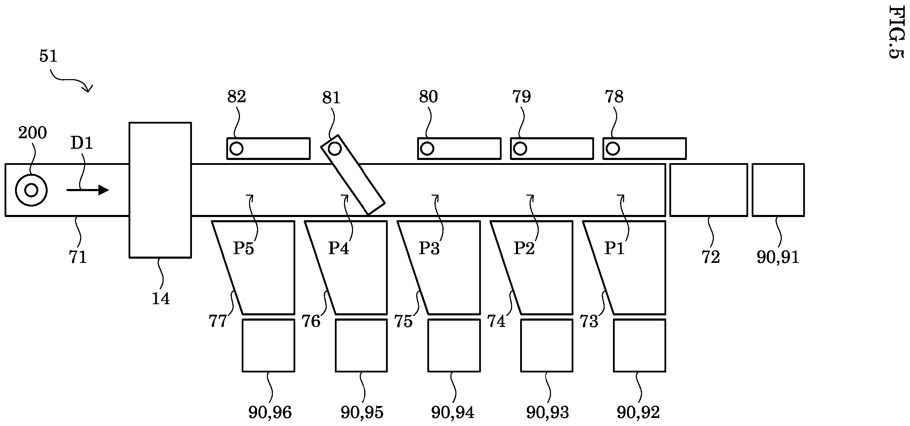

Here, a description is given of the waste tire determination system 100B with reference to FIG. 4 and FIG. 5. Here, FIG. 5 is a plan view showing a configuration of a conveyance portion 51.

The waste tire determination system 100B differs from the waste tire determination system 100A in that it includes the conveyance portion 51 shown in FIG. 4 and FIG. 5. In addition, the control portion 11 and the reading portion 14 of the waste tire determination system 100B have different configurations from those of the waste tire determination system 100A. It is noted that otherwise, the waste tire determination system 100B and the waste tire determination system 100A are common to each other. In the following, only configurations of the waste tire determination system 100B that are different from those of the waste tire determination system 100A are described.

The conveyance portion 51 conveys the waste tire 200 to any one of a plurality of discharge portions 90 (see FIG. 5).

As shown in FIG. 5, the conveyance portion 51 includes a belt conveyer 71, a first guide portion 72, a second guide portion 73, a third guide portion 74, a fourth guide portion 75, a fifth guide portion 76, a sixth guide portion 77, a first movable guide portion 78, a second movable guide portion 79, a third movable guide portion 80, a fourth movable guide portion 81, and a fifth movable guide portion 82.

The belt conveyer 71 conveys the waste tire 200 in one direction. Hereinafter, a direction in which the belt conveyer 71 conveys the waste tire 200 is referred to as a conveyance direction D1 (see FIG. 5).

The first guide portion 72 guides the waste tire 200 that has been conveyed by the belt conveyer 71 to a downstream end of the belt conveyer 71 in the conveyance direction D1, to a first discharge portion 91 (see FIG. 5) that is one of the plurality of discharge portions 90. Specifically, the first discharge portion 91 is provided to be lower than a conveyance surface of the belt conveyer 71 on which the waste tire 200 is conveyed. In addition, the first discharge portion 91 is provided separate, in the conveyance direction D1, from the downstream end of the belt conveyer 71 in the conveyance direction D1. In addition, the first guide portion 72 is formed to slant downwardly from the downstream end of the belt conveyer 71 in the conveyance direction D1 toward the first discharge portion 91.

The second guide portion 73 guides the waste tire 200 that has been conveyed by the belt conveyer 71 to a first position P1 (see FIG. 5) that is upstream, in the conveyance direction D1, of the downstream end of the belt conveyer 71 in the conveyance direction D1, to a second discharge portion 92 (see FIG. 5) that is one of the plurality of discharge portions 90. Specifically, the second discharge portion 92 is provided to be lower than the conveyance surface of the belt conveyer 71. In addition, the second discharge portion 92 is provided separate from the first position P1 in the belt conveyer 71 in a direction perpendicular to the conveyance direction D1. In addition, the second guide portion 73 is formed to slant downwardly from the first position P1 in the belt conveyer 71 toward the second discharge portion 92.

The third guide portion 74 guides the waste tire 200 that has been conveyed by the belt conveyer 71 to a second position P2 (see FIG. 5) that is upstream of the first position P1 in the conveyance direction D1, to a third discharge portion 93 (see FIG. 5) that is one of the plurality of discharge portions 90. Specifically, the third discharge portion 93 is provided to be lower than the conveyance surface of the belt conveyer 71. In addition, the third discharge portion 93 is provided separate from the second position P2 in the belt conveyer 71 in a direction perpendicular to the conveyance direction D1. In addition, the third guide portion 74 is formed to slant downwardly from the second position P2 in the belt conveyer 71 toward the third discharge portion 93.

The fourth guide portion 75 guides the waste tire 200 that has been conveyed by the belt conveyer 71 to a third position P3 (see FIG. 5) that is upstream of the second position P2 in the conveyance direction D1, to a fourth discharge portion 94 (see FIG. 5) that is one of the plurality of discharge portions 90. Specifically, the fourth discharge portion 94 is provided to be lower than the conveyance surface of the belt conveyer 71. In addition, the fourth discharge portion 94 is provided separate from the third position P3 in the belt conveyer 71 in a direction perpendicular to the conveyance direction D1. In addition, the fourth guide portion 75 is formed to slant downwardly from the third position P3 in the belt conveyer 71 toward the fourth discharge portion 94.

The fifth guide portion 76 guides the waste tire 200 that has been conveyed by the belt conveyer 71 to a fourth position P4 (see FIG. 5) that is upstream of the third position P3 in the conveyance direction D1, to a fifth discharge portion 95 (see FIG. 5) that is one of the plurality of discharge portions 90. Specifically, the fifth discharge portion 95 is provided to be lower than the conveyance surface of the belt conveyer 71. In addition, the fifth discharge portion 95 is provided separate from the fourth position P4 in the belt conveyer 71 in a direction perpendicular to the conveyance direction D1. In addition, the fifth guide portion 76 is formed to slant downwardly from the fourth position P4 in the belt conveyer 71 toward the fifth discharge portion 95.

The sixth guide portion 77 guides the waste tire 200 that has been conveyed by the belt conveyer 71 to a fifth position P5 (see FIG. 5) that is upstream of the fourth position P4 in the conveyance direction D1, to a sixth discharge portion 96 (see FIG. 5) that is one of the plurality of discharge portions 90. Specifically, the sixth discharge portion 96 is provided to be lower than the conveyance surface of the belt conveyer 71. In addition, the sixth discharge portion 96 is provided separate from the fifth position P5 in the belt conveyer 71 in a direction perpendicular to the conveyance direction D1. In addition, the sixth guide portion 77 is formed to slant downwardly from the fifth position P5 in the belt conveyer 71 toward the sixth discharge portion 96.

The first movable guide portion 78 is configured to change its attitude between a first attitude (see FIG. 5) and a second attitude, wherein in the first attitude, the first movable guide portion 78 is retreated from the belt conveyer 71, and in the second attitude, the first movable guide portion 78 guides the waste tire 200 that has been conveyed to the first position P1 in the belt conveyer 71, to the second guide portion 73. For example, the first movable guide portion 78 is a rod-like member installed in such a way as to be pivotable around a shaft that extends in a direction perpendicular to the conveyance surface of the belt conveyer 71. Upon receiving a driving force supplied from a drive portion (not shown), the first movable guide portion 78 changes its attitude between the first attitude and the second attitude.

The second movable guide portion 79 is configured to change its attitude between a third attitude (see FIG. 5) and a fourth attitude, wherein in the third attitude, the second movable guide portion 79 is retreated from the belt conveyer 71, and in the fourth attitude, the second movable guide portion 79 guides the waste tire 200 that has been conveyed to the second position P2 in the belt conveyer 71, to the third guide portion 74. For example, the second movable guide portion 79 is a rod-like member installed in such a way as to be pivotable around a shaft that extends in a direction perpendicular to the conveyance surface of the belt conveyer 71. Upon receiving a driving force supplied from a drive portion (not shown), the second movable guide portion 79 changes its attitude between the third attitude and the fourth attitude.

The third movable guide portion 80 is configured to change its attitude between a fifth attitude (see FIG. 5) and a sixth attitude, wherein in the fifth attitude, the third movable guide portion 80 is retreated from the belt conveyer 71, and in the sixth attitude, the third movable guide portion 80 guides the waste tire 200 that has been conveyed to the third position P3 in the belt conveyer 71, to the fourth guide portion 75. For example, the third movable guide portion 80 is a rod-like member installed in such a way as to be pivotable around a shaft that extends in a direction perpendicular to the conveyance surface of the belt conveyer 71. Upon receiving a driving force supplied from a drive portion (not shown), the third movable guide portion 80 changes its attitude between the fifth attitude and the sixth attitude.

The fourth movable guide portion 81 is configured to change its attitude between a seventh attitude and an eighth attitude (see FIG. 5), wherein in the seventh attitude, the fourth movable guide portion 81 is retreated from the belt conveyer 71, and in the eighth attitude, the fourth movable guide portion 81 guides the waste tire 200 that has been conveyed to the fourth position P4 in the belt conveyer 71, to the fifth guide portion 76. For example, the fourth movable guide portion 81 is a rod-like member installed in such a way as to be pivotable around a shaft that extends in a direction perpendicular to the conveyance surface of the belt conveyer 71. Upon receiving a driving force supplied from a drive portion (not shown), the fourth movable guide portion 81 changes its attitude between the seventh attitude and the eighth attitude.

The fifth movable guide portion 82 is configured to change its attitude between a ninth attitude (see FIG. 5) and a tenth attitude, wherein in the ninth attitude, the fifth movable guide portion 82 is retreated from the belt conveyer 71, and in the tenth attitude, the fifth movable guide portion 82 guides the waste tire 200 that has been conveyed to the fifth position P5 in the belt conveyer 71, to the sixth guide portion 77. For example, the fifth movable guide portion 82 is a rod-like member installed in such a way as to be pivotable around a shaft that extends in a direction perpendicular to the conveyance surface of the belt conveyer 71. Upon receiving a driving force supplied from a drive portion (not shown), the fifth movable guide portion 82 changes its attitude between the ninth attitude and the tenth attitude.

As shown in FIG. 5, the reading portion 14 is provided upstream of the fifth position P5 in the belt conveyer 71 in the conveyance direction D1. The reading portion 14 reads the tire identification information from the wireless tag 201 of the waste tire 200 conveyed by the belt conveyer 71. As shown in FIG. 5 the reading portion 14 is a stationary RFID reader.

As shown in FIG. 4, the control portion 11 of the waste tire determination system 100B includes a switch processing portion 61. It is noted that the configurations of the acquisition processing portion 41 and the output processing portion 44 are common to the waste tire determination system 100A and the waste tire determination system 100B.

The determination processing portion 42 determines, based on the tire information acquired by the acquisition processing portion 41, whether or not the tread portion of the waste tire 200 is suitable as a raw material for the reclaimed material.

Specifically, the determination processing portion 42 determines, based on the material configuration information acquired by the acquisition processing portion 41, for which of the reclaimed thermoplastic elastomer or the reclaimed plasticizer, the tread portion of the waste tire 200 is suitable as a raw material. In addition, the determination processing portion 42 determines whether or not the tread portion of the waste tire 200 is suitable as a raw material for the rubber powder to be blended into tread, based on the material configuration information and the manufacturing year/month/day information acquired by the acquisition processing portion 41. In addition, the determination processing portion 42 determines whether or not the tread portion of the waste tire 200 is suitable as a raw material for the rubber powder not to be blended into tread, based on the material configuration information and the manufacturing year/month/day information acquired by the acquisition processing portion 41. In addition, the determination processing portion 42 determines whether or not the tread portion of the waste tire 200 is suitable as a raw material for the reclaimed carbon black, based on the material configuration information acquired by the acquisition processing portion 41. It is noted that the determination processing portion 42 uses the same determination method as that used by the waste tire determination system 100A.

The decision processing portion 43 decides, based on the determination result of the determination processing portion 42, for which reclaimed material the tread portion of the waste tire 200 is to be used as a raw material. In addition, the decision processing portion 43 decides a manufacture condition for manufacturing the reclaimed material by using the tread portion of the waste tire 200, or a use condition for using the reclaimed material manufactured by using the tread portion. It is noted that the decision processing portion 43 uses the same decision method as that used by the waste tire determination system 100A.

The switch processing portion 61 switches destinations to which the waste tire 200 is conveyed, based on the determination result of the decision processing portion 43.

Specifically, the switch processing portion 61 uses the first movable guide portion 78, the second movable guide portion 79, the third movable guide portion 80, the fourth movable guide portion 81, and the fifth movable guide portion 82 to switch the destinations to which the waste tire 200 is conveyed.

For example, when it has been decided that the tread portion of the waste tire 200 is to be used as a raw material for the reclaimed thermoplastic elastomer, the switch processing portion 61 switches the conveyance destination of the waste tire 200 to the first discharge portion 91. Specifically, the switch processing portion 61 sets the attitude of the first movable guide portion 78 to the first attitude. In addition, the switch processing portion 61 sets the attitude of the second movable guide portion 79 to the third attitude. In addition, the switch processing portion 61 sets the attitude of the third movable guide portion 80 to the fifth attitude. In addition, the switch processing portion 61 sets the attitude of the fourth movable guide portion 81 to the seventh attitude. In addition, the switch processing portion 61 sets the attitude of the fifth movable guide portion 82 to the ninth attitude. With this setting, the waste tire 200 conveyed by the belt conveyer 71 is guided to the first guide portion 72 without contacting any of the first movable guide portion 78, the second movable guide portion 79, the third movable guide portion 80, the fourth movable guide portion 81, and the fifth movable guide portion 82.

In addition, when it has been decided that the tread portion of the waste tire 200 is to be used as a raw material for the reclaimed plasticizer, the switch processing portion 61 switches the conveyance destination of the waste tire 200 to the second discharge portion 92. Specifically, the switch processing portion 61 sets the attitude of the first movable guide portion 78 to the second attitude. In addition, the switch processing portion 61 sets the attitude of the second movable guide portion 79 to the third attitude. In addition, the switch processing portion 61 sets the attitude of the third movable guide portion 80 to the fifth attitude. In addition, the switch processing portion 61 sets the attitude of the fourth movable guide portion 81 to the seventh attitude. In addition, the switch processing portion 61 sets the attitude of the fifth movable guide portion 82 to the ninth attitude. With this setting, the waste tire 200 conveyed by the belt conveyer 71 comes to contact with the first movable guide portion 78 and is guided to the second guide portion 73.

In addition, when it has been decided that the tread portion of the waste tire 200 is to be used as a raw material for the rubber powder to be blended into tread, the switch processing portion 61 switches the conveyance destination of the waste tire 200 to the third discharge portion 93. Specifically, the switch processing portion 61 sets the attitude of the first movable guide portion 78 to the first attitude. In addition, the switch processing portion 61 sets the attitude of the second movable guide portion 79 to the fourth attitude. In addition, the switch processing portion 61 sets the attitude of the third movable guide portion 80 to the fifth attitude. In addition, the switch processing portion 61 sets the attitude of the fourth movable guide portion 81 to the seventh attitude. In addition, the switch processing portion 61 sets the attitude of the fifth movable guide portion 82 to the ninth attitude. With this setting, the waste tire 200 conveyed by the belt conveyer 71 comes to contact with the second movable guide portion 79 and is guided to the third guide portion 74.

In addition, when it has been decided that the tread portion of the waste tire 200 is to be used as a raw material for the rubber powder not to be blended into tread, the switch processing portion 61 switches the conveyance destination of the waste tire 200 to the fourth discharge portion 94. Specifically, the switch processing portion 61 sets the attitude of the first movable guide portion 78 to the first attitude. In addition, the switch processing portion 61 sets the attitude of the second movable guide portion 79 to the third attitude. In addition, the switch processing portion 61 sets the attitude of the third movable guide portion 80 to the sixth attitude. In addition, the switch processing portion 61 sets the attitude of the fourth movable guide portion 81 to the seventh attitude. In addition, the switch processing portion 61 sets the attitude of the fifth movable guide portion 82 to the ninth attitude. With this setting, the waste tire 200 conveyed by the belt conveyer 71 comes to contact with the third movable guide portion 80 and is guided to the fourth guide portion 75.

In addition, when it has been decided that the tread portion of the waste tire 200 is to be used as a raw material for the reclaimed carbon black, the switch processing portion 61 switches the conveyance destination of the waste tire 200 to the fifth discharge portion 95. Specifically, the switch processing portion 61 sets the attitude of the first movable guide portion 78 to the first attitude. In addition, the switch processing portion 61 sets the attitude of the second movable guide portion 79 to the third attitude. In addition, the switch processing portion 61 sets the attitude of the third movable guide portion 80 to the fifth attitude. In addition, the switch processing portion 61 sets the attitude of the fourth movable guide portion 81 to the eighth attitude. In addition, the switch processing portion 61 sets the attitude of the fifth movable guide portion 82 to the ninth attitude. With this setting, the waste tire 200 conveyed by the belt conveyer 71 comes to contact with the fourth movable guide portion 81 and is guided to the fifth guide portion 76.

In addition, when it has been decided that the tread portion of the waste tire 200 is not suitable as a raw material for any reclaimed material, the switch processing portion 61 switches the conveyance destination of the waste tire 200 to the sixth discharge portion 96. Specifically, the switch processing portion 61 sets the attitude of the first movable guide portion 78 to the first attitude. In addition, the switch processing portion 61 sets the attitude of the second movable guide portion 79 to the third attitude. In addition, the switch processing portion 61 sets the attitude of the third movable guide portion 80 to the fifth attitude. In addition, the switch processing portion 61 sets the attitude of the fourth movable guide portion 81 to the seventh attitude. In addition, the switch processing portion 61 sets the attitude of the fifth movable guide portion 82 to the tenth attitude. With this setting, the waste tire 200 conveyed by the belt conveyer 71 comes to contact with the fifth movable guide portion 82 and is guided to the sixth guide portion 77.

In the waste tire determination system 100B, a person places the waste tire 200 at an upstream end of the belt conveyer 71 in the conveyance direction D1. This allows the waste tire 200 to be conveyed by the belt conveyer 71 via the reading portion 14. When the waste tire 200 conveyed by the belt conveyer 71 enters the communication range, the reading portion 14 reads the tire identification information from the wireless tag 201 of the waste tire 200. When the tire identification information has been read by the reading portion 14, the acquisition processing portion 41 acquires the tire information based on the tire identification information. In addition, the determination processing portion 42 determines, based on the tire information acquired by the acquisition processing portion 41, whether or not the tread portion of the waste tire 200 is suitable as a raw material for the reclaimed material. In addition, the decision processing portion 43 decides, based on the determination result of the determination processing portion 42, for which reclaimed material the tread portion of the waste tire 200 is to be used as a raw material. In addition, the switch processing portion 61 switches the conveyance destination of the waste tire 200 conveyed by the conveyance portion 51, based on the decision result of the decision processing portion 43. This allows the waste tire 200 conveyed by the belt conveyer 71 to be discharged to any one of the plurality of discharge portions 90 corresponding to the plurality of groups. That is, the waste tire 200 is classified into any one of the plurality of groups corresponding to the plurality of reclaimed materials. It is noted that parts of the waste tire 200 other than the tread portion may be used in manufacturing the rubber powder not to be blended into tread, or may be used as a base tire for retread.

As described above, the waste tire determination system 100B can execute the acquisition step, the determination step, the decision step, and the classification step included in the reclaimed material manufacturing method according to the embodiment of the present disclosure.

[Tire manufacturing method]

Next, the tire manufacturing method according to the embodiment of the present disclosure is described.

The tire manufacturing method according to the embodiment of the present disclosure includes a second manufacturing step.

In the second manufacturing step, a tire is manufactured by processing the reclaimed material manufactured by the reclaimed material manufacturing method according to the embodiment of the present disclosure. The second manufacturing step is executed by a person or a manufacturing machine or the like. It is noted that "processing the reclaimed material" refers to subjecting the reclaimed material to one or more processes out of: kneading; extrusion; molding; and vulcanization.

For example, in the second manufacturing step, a thermoplastic elastomer composition for tire is manufactured by using the reclaimed thermoplastic elastomer manufactured by the reclaimed material manufacturing method according to the embodiment of the present disclosure. As described above, the maximum blending ratio of the reclaimed thermoplastic elastomer is decided based on the ratio of the reclaimed thermoplastic elastomer contained in the thermoplastic elastomer composition that is the raw material, and the elapsed years thereof. As a result, when the thermoplastic elastomer composition for tire is manufactured by using the reclaimed thermoplastic elastomer composition, the content of the reclaimed thermoplastic elastomer in the thermoplastic elastomer component is adjusted to be equal to or less than the blending ratio. A virgin thermoplastic elastomer that has not been reused is used for the other thermoplastic elastomer components.

In addition, when the thermoplastic elastomer composition for tire is manufacture by using the reclaimed thermoplastic elastomer, any of the above-mentioned tire materials, as well as the reclaimed materials such as the rubber powder to be blended into tread, the rubber powder not to be blended into tread, the reclaimed plasticizer, and the reclaimed carbon black may also be used in addition according to purposes.

In addition, in the second manufacturing step, a composition for tread is manufactured by using any one of or any combination of: the rubber powder to be blended into tread; the reclaimed carbon black; and the reclaimed plasticizer manufactured by the reclaimed material manufacturing method according to the embodiment of the present disclosure. For example, the composition for tread is manufactured by kneading: the rubber powder to be blended into tread, the reclaimed carbon black, and the reclaimed plasticizer manufactured by the reclaimed material manufacturing method according to the embodiment of the present disclosure; a diene-based rubber such as natural rubber, butadiene rubber, and styrene-butadiene rubber; a reinforcing material such as silica; and various types of compounding agents. In addition, in the second manufacturing step, the tread portion of the tire is formed by using the manufactured composition for tread.

In addition, in the second manufacturing step, a composition not for tread is manufactured by using any one of or any combination of: the rubber powder not to be blended into tread; the reclaimed carbon black; and the reclaimed plasticizer manufactured by the reclaimed material manufacturing method according to the embodiment of the present disclosure. For example, the composition not for tread is manufactured by kneading: the rubber powder not to be blended into tread, the reclaimed carbon black, and the reclaimed plasticizer manufactured by the reclaimed material manufacturing method according to the embodiment of the present disclosure; a diene-based rubber such as natural rubber, butadiene rubber, and styrene-butadiene rubber; a reinforcing material such as silica; and various types of compounding agents. In addition, in the second manufacturing step, members of the tire such as a belt coating layer, a belt reinforcing layer, a sidewall portion, a rim chafer portion, and a bead filler portion are formed by using the manufactured composition not for tread.

In addition, in the second manufacturing step, a raw tire is manufactured by combining: the tread portion formed by using the composition for tread; the inner liner portion prepared separately; and the members formed by using the composition not for tread. And a tire is manufactured by vulcanizing the manufactured raw tire. In addition to this, a tire is manufactured by molding the thermoplastic elastomer composition for tire manufactured by using the reclaimed thermoplastic elastomer, into the shapes of respective members and combining them with other rubber composition and thermoplastic elastomer composition. It is noted that a conventionally well-known method may be used to manufacture the tire.

In the tire manufacturing method according to the embodiment of the present disclosure, a tire is manufactured by using a reclaimed material having a higher quality than conventional ones. Accordingly, it is possible to improve the quality of the tire manufactured by using the reclaimed material.

The embodiment of the present disclosure described above includes the following disclosure items (1) to (20).

Disclosure item (1) is a waste tire determination method including: an acquisition step of acquiring tire information concerning a waste tire; and a determination step of determining, based on the tire information acquired in the acquisition step, whether or not a part or all of the waste tire is suitable as a raw material for a predetermined reclaimed material.

With the above-described method, it is possible to select, out of various types of waste tires, a waste tire that is suitable as a raw material for the reclaimed material. Accordingly, it is possible to improve the quality of the reclaimed material manufactured by using the waste tire.

Disclosure item (2) is the waste tire determination method according to the disclosure item (1), wherein in the acquisition step, the tire information is either acquired from a wireless tag that has been installed to the waste tire at a place inside an outer surface of the waste tire, or acquired from both of the wireless tag and a surface of the waste tire.

With the above-described method, compared with a method for acquiring the tire information from a surface of the waste tire, it is possible to avoid a loss of information due to wear or damage of an outer surface of the waste tire. Accordingly, it is possible to improve the probability of succeeding in acquiring the tire information.

Disclosure item (3) is the waste tire determination method according to the disclosure item (1), wherein in the acquisition step, the tire information is acquired based on identification information of the waste tire, the identification information being either acquired from a wireless tag that has been installed to the waste tire at a place inside an outer surface of the waste tire, or acquired from both of the wireless tag and a surface of the waste tire.

With the above-described method, as is the case with the waste tire determination method according to the disclosure item (2), it is possible to improve the probability of succeeding in acquiring the tire information.

Disclosure item (4) is the waste tire determination method according to the disclosure item (1), wherein the tire information is established before factory shipment of the waste tire.

Disclosure item (5) is the waste tire determination method according to any one of the disclosure items (1) to (4), wherein the tire information includes material configuration information concerning material configuration of the waste tire, and in the determination step, it is determined, based on the material configuration information acquired in the acquisition step, whether or not a part or all of the waste tire is suitable as a raw material for the reclaimed material.

With the above-described method, it is possible to select a waste tire by taking the material configuration of the waste tire into consideration. As a result, compared with the waste tire determination method according to the disclosure item (1), it is possible to further improve the quality of the reclaimed material manufactured by using the waste tire.

Disclosure item (6) is the waste tire determination method according to any one of the disclosure items (1) to (5), wherein the reclaimed material includes any one or more of rubber powder, reclaimed carbon black, reclaimed plasticizer, reclaimed rubber, and reclaimed thermoplastic elastomer.

Disclosure item (7) is the waste tire determination method according to any one of the disclosure items (1) to (6), wherein one or more processors execute the acquisition step and the determination step.

With the above-described method, compared with a case where a person executes each step included in the waste tire determination method, it is possible to eliminate the time and effort of the person.

Disclosure item (8) is a reclaimed material manufacturing method including: an acquisition step of acquiring tire information concerning a waste tire; a determination step of determining, based on the tire information acquired in the acquisition step, whether or not a part or all of the waste tire is suitable as a raw material for a predetermined reclaimed material; and a first manufacturing step of manufacturing the reclaimed material by using the part or all of the waste tire determined in the determination step as suitable as a raw material for the reclaimed material.

With the above-described method, it is possible to select, out of various types of waste tires, a waste tire that is suitable as a raw material for the reclaimed material, and manufacture the reclaimed material by using the selected waste tire. Accordingly, it is possible to improve the quality of the reclaimed material manufactured by using the waste tire.

Disclosure item (9) is the reclaimed material manufacturing method according to the disclosure item (8), wherein in the acquisition step, the tire information is either acquired from a wireless tag that has been installed to the waste tire at a place inside an outer surface of the waste tire, or acquired from both of the wireless tag and a surface of the waste tire.

With the above-described method, as is the case with the waste tire determination method according to the disclosure item (2), it is possible to improve the probability of succeeding in acquiring the tire information.

Disclosure item (10) is the reclaimed material manufacturing method according to the disclosure item (8), wherein in the acquisition step, the tire information is acquired based on identification information of the waste tire, the identification information being either acquired from a wireless tag that has been installed to the waste tire at a place inside an outer surface of the waste tire, or acquired from both of the wireless tag and a surface of the waste tire.

With the above-described method, as is the case with the waste tire determination method according to the disclosure item (2), it is possible to improve the probability of succeeding in acquiring the tire information.

Disclosure item (11) is the reclaimed material manufacturing method according to any one of the disclosure items (8) to (10), wherein the tire information includes material configuration information concerning material configuration of the waste tire, and in the determination step, it is determined, based on the material configuration information acquired in the acquisition step, whether or not a part or all of the waste tire is suitable as a raw material for the reclaimed material.

With the above-described method, as is the case with the waste tire determination method according to the disclosure item (5), it is possible to further improve the quality of the reclaimed material manufactured by using the waste tire.

Disclosure item (12) is the reclaimed material manufacturing method according to any one of the disclosure items (8) to (11), wherein the first manufacturing step includes: a thermal decomposition step of thermally decomposing at least a part of the waste tire by heating by burning, or heating by microwave irradiation; and a recovery step of recovering at least a part of a decomposed product acquired in the thermal decomposition step.

With the above-described method, it is possible to adjust the thermal decomposition temperature that is applied when the waste tire is thermally decomposed, based on the material configuration thereof. Accordingly, it is possible to manufacture the reclaimed material efficiently by preliminarily dividing waste tires into groups based on the material configuration and setting the thermal decomposition temperature for each of the groups of waste tires. In particular, in a case where thermal decomposition is performed by heating by microwave irradiation, it is possible to increase the purity of the material acquired by the thermal decomposition. As a result, it is possible to further improve the quality of the manufactured reclaimed material.

Disclosure item (13) is the reclaimed material manufacturing method according to any one of the disclosure items (8) to (12), wherein the reclaimed material includes any one or more of rubber powder, reclaimed carbon black, reclaimed plasticizer, reclaimed rubber, and reclaimed thermoplastic elastomer.

Disclosure item (14) is the reclaimed material manufacturing method according to any one of the disclosure items (8) to (13), wherein one or more processors execute the acquisition step and the determination step.

With the above-described method, as is the case with the waste tire determination method according to the disclosure item (7), it is possible to eliminate the time and effort of the person.

Disclosure item (15) is the reclaimed material manufacturing method according to any one of the disclosure items (8) to (14), wherein the reclaimed material includes reclaimed plasticizer, and the first manufacturing step of manufacturing the reclaimed plasticizer includes a thermal decomposition step of thermally decomposing a part or all of the waste tire determined as suitable as a raw material for the reclaimed plasticizer.

Disclosure item (16) is the reclaimed material manufacturing method according to the disclosure item (15), wherein formula (3) shown below is satisfied, wherein T1 denotes a thermal decomposition temperature in the thermal decomposition step, and R1 denotes a component ratio of diene-based rubber in polymer component in a part or all of the waste tire that is thermally decomposed.

$$R1 \times T1 \leq 300 \ldots (3)$$

With the above-described method, the higher the component ratio of diene-based rubber in polymer component is, the lower the upper limit value of the thermal decomposition temperature is. As a result, it is possible to suppress recombination by radical generated during the thermal decomposition.

Disclosure item (17) is the reclaimed material manufacturing method according to any one of the disclosure items (8) to (16), wherein the reclaimed material includes rubber powder, and the first manufacturing step of manufacturing the rubber powder includes a grinding step of grinding a part or all of the waste tire determined as suitable as a raw material for the rubber powder.

Disclosure item (18) is the reclaimed material manufacturing method according to the disclosure item (17), wherein formula (4) shown below is satisfied, wherein T2 denotes an ambient temperature during grinding in the grinding step, and R2 denotes a ratio of content of carbon black in a part or all of the waste tire that is ground.

$$T2 \leq 50 - R2 \times 0.5 \ldots (4)$$

With the above-described method, the higher the ratio of content of carbon black is, the lower the upper limit value of ambient temperature during grinding is. As a result, it is possible to suppress generation of heat when a mechanical force is applied to a part or all of the waste tire during grinding of the part or all of the waste tire. Accordingly, it is possible to suppress the occurrence of a phenomenon that during grinding of a part or all of the waste tire, the part or all of the waste tire is plasticized by heat and becomes unable to be ground.

Disclosure item (19) is the reclaimed material manufacturing method according to any one of the disclosure items (8) to (18), wherein the reclaimed material includes either or both of reclaimed carbon black and reclaimed monomer, and the first manufacturing step of manufacturing either or both of the reclaimed carbon black and the reclaimed monomer includes a thermal decomposition step of thermally decomposing a part or all of the waste tire determined as suitable as a raw material for either or both of the reclaimed carbon black and the reclaimed monomer.

Disclosure item (20) is the reclaimed material manufacturing method according to the disclosure item (19), wherein formula (6) shown below is satisfied, wherein T3 denotes a thermal decomposition temperature in the thermal decomposition step, and R3 denotes a ratio of content of carbon black in a part or all of the waste tire that is thermally decomposed.

$$T3 \geq 600 - R3 \times 2.5 \ldots (6)$$

With the above-described method, the lower the ratio of content of carbon black is, the higher the lower limit value of the thermal decomposition temperature is. As a result, it is possible to compensate for the decrease in the thermal conductivity that would occur when the ratio of content of carbon black is low. Accordingly, it is possible to suppress decrease in the manufacture efficiency of the reclaimed carbon black that would occur when the ratio of content of carbon black is low.

Disclosure item (21) is the reclaimed material manufacturing method according to the disclosure item (19), wherein formula (7) shown below is satisfied, wherein T4 denotes a thermal decomposition temperature in the thermal decomposition step in which thermal decomposition is performed by heating by microwave irradiation, and R4 denotes a ratio of content of carbon black in a part or all of the waste tire that is thermally decomposed.

$$T4 \geq 350 - R4 \times 2.5 \ldots (7)$$

With the above-described method, as is the case with the reclaimed material manufacturing method according to the disclosure item (20), it is possible to suppress decrease in the manufacture efficiency of the reclaimed carbon black that would occur when the ratio of content of carbon black is low. In addition, the use of microwave makes it possible to perform the thermal decomposition efficiently.

Disclosure item (22) is a tire manufacturing method that includes a second manufacturing step of manufacturing a tire by processing the reclaimed material manufactured by the reclaimed material manufacturing method according to any one of the disclosure items (8) to (21).

With the above-described method, it is possible to manufacture a tire by using a high-quality reclaimed material. Accordingly, it is possible to improve the quality of the tire manufactured by using the reclaimed material.

**Claims**

1. A waste tire determination method comprising:

    an acquisition step of acquiring tire information concerning a waste tire; and
    a determination step of determining, based on the tire information acquired in the acquisition step, whether or not a part or all of the waste tire is suitable as a raw material for a predetermined reclaimed material.

2. The waste tire determination method according to claim 1, wherein
in the acquisition step, the tire information is either acquired from a wireless tag that has been installed to the waste tire at a place inside an outer surface of the waste tire, or acquired from both of the wireless tag and a surface of the waste tire.

3. The waste tire determination method according to claim 1, wherein
in the acquisition step, the tire information is acquired based on identification information of the waste tire, the identification information being either acquired from a wireless tag that has been installed to the waste tire at a place inside an outer surface of the waste tire, or acquired from both of the wireless tag and a surface of the waste tire.

4. The waste tire determination method according to claim 1, wherein
the tire information is established before factory shipment of the waste tire.

5. The waste tire determination method according to any one of claims 1 to 4, wherein

    the tire information includes material configuration information concerning material configuration of the waste tire, and
    in the determination step, it is determined, based on the material configuration information acquired in the acquisition step, whether or not a part or all of the waste tire is suitable as a raw material for the reclaimed material.

6. The waste tire determination method according to any one of claims 1 to 4, wherein
the reclaimed material includes any one or more of rubber powder, reclaimed carbon black, reclaimed plasticizer, reclaimed rubber, and reclaimed thermoplastic elastomer.

7. The waste tire determination method according to any one of claims 1 to 4, wherein
one or more processors execute the acquisition step and the determination step.

8. A reclaimed material manufacturing method comprising:

    an acquisition step of acquiring tire information concerning a waste tire;
    a determination step of determining, based on the tire information acquired in the acquisition step, whether or not a part or all of the waste tire is suitable as a raw material for a predetermined reclaimed material; and
    a first manufacturing step of manufacturing the reclaimed material by using the part or all of the waste tire determined in the determination step as suitable as a raw material for the reclaimed material.

9. The reclaimed material manufacturing method according to claim 8, wherein
in the acquisition step, the tire information is either acquired from a wireless tag that has been installed to the waste tire at a place inside an outer surface of the waste tire, or acquired from both of the wireless tag and a surface of the waste tire.

10. The reclaimed material manufacturing method according to claim 8, wherein
in the acquisition step, the tire information is acquired based on identification information of the waste tire, the identification information being either acquired from a wireless tag that has been installed to the waste tire at a place inside an outer surface of the waste tire, or acquired from both of the wireless tag and a surface of the waste tire.

11. The reclaimed material manufacturing method according to any one of claims 8 to 10, wherein

the tire information includes material configuration information concerning material configuration of the waste tire, and
in the determination step, it is determined, based on the material configuration information acquired in the acquisition step, whether or not a part or all of the waste tire is suitable as a raw material for the reclaimed material.

12. The reclaimed material manufacturing method according to any one of claims 8 to 10, wherein
the first manufacturing step includes:

a thermal decomposition step of thermally decomposing at least a part of the waste tire by heating by burning, or heating by microwave irradiation; and
a recovery step of recovering at least a part of a decomposed product acquired in the thermal decomposition step.

13. The reclaimed material manufacturing method according to any one of claims 8 to 10, wherein
the reclaimed material includes any one or more of rubber powder, reclaimed carbon black, reclaimed plasticizer, reclaimed rubber, and reclaimed thermoplastic elastomer.

14. The reclaimed material manufacturing method according to any one of claims 8 to 10, wherein
one or more processors execute the acquisition step and the determination step.

15. The reclaimed material manufacturing method according to any one of claims 8 to 10, wherein

the reclaimed material includes reclaimed plasticizer, and
the first manufacturing step of manufacturing the reclaimed plasticizer includes a thermal decomposition step of thermally decomposing a part or all of the waste tire determined as suitable as a raw material for the reclaimed plasticizer.

16. The reclaimed material manufacturing method according to claim 15, wherein
formula (1) shown below is satisfied, wherein T1 denotes a thermal decomposition temperature in the thermal decomposition step, and R1 denotes a component ratio of diene-based rubber in polymer component in a part or all of the waste tire that is thermally decomposed:

$$R1 \times T1 \leq 300 \dots (1).$$

17. The reclaimed material manufacturing method according to any one of claims 8 to 10, wherein

the reclaimed material includes rubber powder, and
the first manufacturing step of manufacturing the rubber powder includes a grinding step of grinding a part or all of the waste tire determined as suitable as a raw material for the rubber powder.

18. The reclaimed material manufacturing method according to claim 17, wherein
formula (2) shown below is satisfied, wherein T2 denotes an ambient temperature during grinding in the grinding step, and R2 denotes a ratio of content of carbon black in a part or all of the waste tire that is ground:

$$T2 \leq 50 - R2 \times 0.5 \dots (2).$$

19. The reclaimed material manufacturing method according to any one of claims 8 to 10, wherein

the reclaimed material includes either or both of reclaimed carbon black and reclaimed monomer, and
the first manufacturing step of manufacturing either or both of the reclaimed carbon black and the reclaimed monomer includes a thermal decomposition step of thermally decomposing a part or all of the waste tire determined as suitable as a raw material for either or both of the reclaimed carbon black and the reclaimed monomer.

20. The reclaimed material manufacturing method according to claim 19, wherein
formula (3) shown below is satisfied, wherein T3 denotes a thermal decomposition temperature in the thermal decomposition step, and R3 denotes a ratio of content of carbon black in a part or all of the waste tire that is thermally decomposed:

$$T3 \geq 600\text{-}R3\text{x}2.5 \dots (3).$$

21. The reclaimed material manufacturing method according to claim 19, wherein
formula (4) shown below is satisfied, wherein T4 denotes a thermal decomposition temperature in the thermal decomposition step in which thermal decomposition is performed by heating by microwave irradiation, and R4 denotes a ratio of content of carbon black in a part or all of the waste tire that is thermally decomposed:

$$T4 \geq 350\text{-}R4\text{x}2.5 \dots (4).$$

22. A tire manufacturing method that includes a second manufacturing step of manufacturing a tire by processing the reclaimed material manufactured by the reclaimed material manufacturing method according to any one of claims 8 to 10.

FIG.1

FIG.2

FIG.3

```
            ┌─────────────┐
            │    START    │
            └──────┬──────┘
                   │                S11
            ┌──────▼──────────┐
            │ ACQUIRE TIRE    │
            │ INFORMATION     │
            └──────┬──────────┘
                   │                S12
            ┌──────▼──────────┐
            │ FIRST           │
            │ DETERMINATION   │
            │ PROCESS         │
            └──────┬──────────┘
                   │                S13
               ◇ SUITABLE? ◇──── No ──┐
                   │ Yes              │
                   │          S14     │
            ┌──────▼──────────┐       │
            │ SECOND          │       │
            │ DETERMINATION   │       │
            │ PROCESS         │       │
            └──────┬──────────┘       │
                   │          S15     │
               ◇ SUITABLE? ◇── Yes ─┐ │
                   │ No            │ │
                   │       S16     │ │
            ┌──────▼──────────┐    │ │
            │ THIRD           │    │ │
            │ DETERMINATION   │    │ │
            │ PROCESS         │    │ │
            └──────┬──────────┘    │ │
                   │◄──────────────┘ │
                   │          S17     │
            ┌──────▼──────────┐       │
            │ FOURTH          │       │
            │ DETERMINATION   │       │
            │ PROCESS         │       │
            └──────┬──────────┘       │
                   │◄─────────────────┘
                   │          S18
            ┌──────▼──────────┐
            │ FIRST DECISION  │
            │ PROCESS         │
            └──────┬──────────┘
                   │          S19
            ┌──────▼──────────┐
            │ SECOND DECISION │
            │ PROCESS         │
            └──────┬──────────┘
                   │          S20
            ┌──────▼──────────┐
            │ OUTPUT DECISION │
            │ RESULTS         │
            └──────┬──────────┘
            ┌──────▼──────┐
            │     END     │
            └─────────────┘
```

FIG.4

100B

1

WASTE TIRE DETERMINATION APPARATUS

11 — CONTROL PORTION
21 — CPU
22 — ROM
23 — RAM
41 — ACQUISITION PROCESSING PORTION
42 — DETERMINATION PROCESSING PORTION
43 — DECISION PROCESSING PORTION
44 — OUTPUT PROCESSING PORTION
61 — SWITCH PROCESSING PORTION

12 — OPERATION/DISPLAY PORTION
13 — STORAGE PORTION
14 — READING PORTION
15 — COMMUNICATION PORTION

51 — CONVEYANCE PORTION
78 — FIRST MOVABLE GUIDE PORTION
79 — SECOND MOVABLE GUIDE PORTION
80 — THIRD MOVABLE GUIDE PORTION
81 — FOURTH MOVABLE GUIDE PORTION
82 — FIFTH MOVABLE GUIDE PORTION

2 — SERVER
31 — DATABASE

FIG.5

## INTERNATIONAL SEARCH REPORT

| International application No. |
|---|
| **PCT/JP2022/047323** |

### A. CLASSIFICATION OF SUBJECT MATTER

***B60C 19/00***(2006.01)i
FI: B60C19/00 L

According to International Patent Classification (IPC) or to both national classification and IPC

### B. FIELDS SEARCHED

Minimum documentation searched (classification system followed by classification symbols)

B60C19/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2011-523607 A (ENTYRECYCLE, LLC) 18 August 2011 (2011-08-18) claims, examples | 1-22 |
| A | US 2016/0307169 A1 (BRIDGESTONE AMERICAS TIRE OPERATIONS, LLC) 20 October 2016 (2016-10-20) claims, examples | 1-22 |
| A | JP 2005-537159 A (DEVLIN, III, FRED G.) 08 December 2005 (2005-12-08) claims, fig. 1-6 | 1-22 |
| A | CN 210924610 U (DONGGUAN BINGNENG RUBBER CO., LTD.) 03 July 2020 (2020-07-03) claims, examples | 1-22 |
| A | CN 113352506 B (SHAOYANG BLACK GEM RENEWABLE RESOURCES CO., LTD.) 18 February 2022 (2022-02-18) claims, fig. 1, 2 | 1-22 |
| A | JP 2014-46879 A (BRIDGESTONE CORP.) 17 March 2014 (2014-03-17) claims, fig. 1-4 | 1-22 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 February 2023** | **07 March 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/047323**

| Patent document cited in search report | | | Publication date (day/month/year) | Patent family member(s) | | | Publication date (day/month/year) |
|---|---|---|---|---|---|---|---|
| JP | 2011-523607 | A | 18 August 2011 | US | 2009/0294562 | A1 | |
| | | | | claims, examples | | | |
| | | | | WO | 2009/149025 | A2 | |
| | | | | EP | 2321103 | A1 | |
| | | | | CN | 102083600 | A | |
| US | 2016/0307169 | A1 | 20 October 2016 | WO | 2015/094832 | A1 | |
| | | | | EP | 3083222 | A1 | |
| | | | | CN | 105829087 | A | |
| JP | 2005-537159 | A | 08 December 2005 | US | 2004/0041041 | A1 | |
| | | | | claims, fig. 1-6 | | | |
| | | | | WO | 2004/020226 | A2 | |
| | | | | EP | 2196396 | A1 | |
| | | | | CN | 1678494 | A | |
| CN | 210924610 | U | 03 July 2020 | (Family: none) | | | |
| CN | 113352506 | B | 18 February 2022 | (Family: none) | | | |
| JP | 2014-46879 | A | 17 March 2014 | US | 8849500 | B2 | |
| | | | | claims, fig. 1-4 | | | |
| | | | | EP | 2703194 | A1 | |
| | | | | CN | 103674573 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017196917 A